# EUROPEAN PATENT APPLICATION

(11) **EP 4 835 009 A1**
(43) Date of publication of application: **04.11.2026**
(21) Application number: 25173552.8
(22) Date of filing: 30.04.2025
(51) Int. Cl.: C09B 11/10, G02B 5/23

(54) **COMPOUND PROVIDING NARROW ABSORPTION PEAK**

(71) Applicant: Transitions Optical Limited, Tuam, Galway H54 RD25 (IE)
(72) Inventor: Smith, Zachary, Tuam, County Galway (IE); Patel, Pansy Dhilon, Tuam, County Galway (IE); Montes, Victor A., Tuam, County Galway (IE); Walters, Robert W., Tuam, County Galway (IE); Pollin, Michael, Tuam, County Galway (IE)
(74) Representative: f & e patent

(57) **Abstract**

The present invention relates to a compound including a core skeletal structure represented by the following Formula (I),

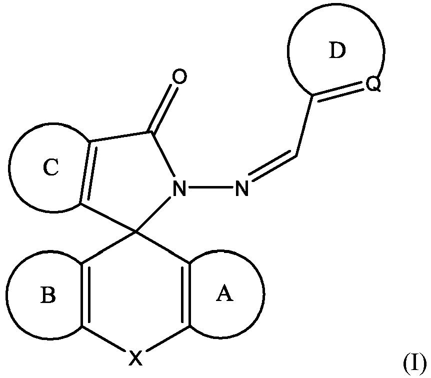

With reference to Formula (I): Ring-A and Ring-B each independently include aryl substituted with at least one electron donating group; Ring-C includes optionally substituted aryl, or optionally substituted heteroaryl; Q of Ring-D is C-OH or N; when Q is C-OH, Ring-D includes optionally substituted aryl; when Q is N, Ring-D includes optionally substituted heteroaryl; and X is S, C(R^{a})(R^{b}), or Si(R^{c})(R^{d}), where R^{a}, R^{b}, R^{c}, and R^{d} are in each case independently optionally substituted alkyl, or optionally substituted aryl. The present invention also relates to a photochromic article that includes a photochromic layer including a compound represented by Formula (I), where an activated state absorption spectrum of the photochromic article includes at least one narrow peak.

## Description

### FIELD

The present invention relates to: compounds that provide an activated state absorption spectrum that includes at least one narrow peak having a wavelength width of 40 nm relative to upper and lower absorbances that are each independently less than 85% of the peak absorbance; and photochromic articles including a photochromic layer that includes one or more such compounds.

### BACKGROUND

In response to certain wavelengths of electromagnetic radiation (or "actinic radiation"), photochromic compounds, such as indenonaphthopyrans (or indeno-fused naphthopyrans), typically undergo a transformation from one form or state to another form, with each form having a characteristic or distinguishable absorption spectrum associated therewith. Typically, upon exposure to actinic radiation, many photochromic compounds are transformed from a closed-form, which corresponds to an unactivated (or bleached, e.g., substantially colorless) state of the photochromic compound, to an open-form, which corresponds to an activated (or colored) state of the photochromic compound. In the absence of exposure to actinic radiation, such photochromic compounds are reversibly transformed from the activated (or colored) state, back to the unactivated (or bleached) state. Compositions and articles, such as eyewear lenses, that contain photochromic compounds or have photochromic compounds applied thereto (e.g., in form of a photochromic coating composition) typically display colorless (e.g., clear) and colored states that correspond to the colorless and colored states of the photochromic compounds contained therein or applied thereto.

When in the activated (or colored) state, the enhancement of one or more visible colors would be desirable. Such color enhancement is typically perceived as enhanced visual sharpness. The enhancement of one or more visible colors could be achieved by selectively and narrowly limiting or blocking certain selected wavelengths of visible light. Photochromic compounds, such as indenonaphthopyrans, typically have broad visible absorption spectra, and as such are not particularly well suited for selectively limiting or blocking certain selected wavelengths.

It would be desirable to develop new compounds that are capable of providing one or more narrow activated state absorption peaks. It would be further desirable that such newly developed compounds are capable of selectively limiting or blocking certain selected wavelengths in an activated state.

### SUMMARY

In accordance with the present invention, there is provided a compound comprising a core structure (or core skeletal structure) represented by the following Formula (I),

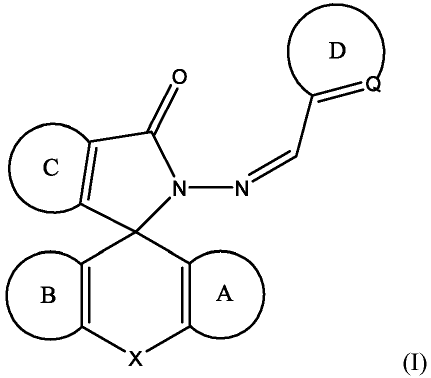

With reference to Formula (I): Ring-A and Ring-B each independently comprise aryl substituted with at least one electron donating group; Ring-C comprises unsubstituted aryl, substituted aryl, unsubstituted heteroaryl, or substituted heteroaryl; and Q of Ring-D is C-OH or N. When Q is C-OH, Ring-D comprises unsubstituted aryl, or substituted aryl (aside from the hydroxyl of Q being C-OH). When Q is N, Ring-D comprises unsubstituted heteroaryl or substituted heteroaryl. With further reference to Formula (I), X is S, C(R^{a})(R^{b}), or Si(R^{c})(R^{d}), wherein R^{a}, R^{b}, R^{c}, and R^{d} are in each case independently unsubstituted or substituted alkyl, or unsubstituted or substituted aryl.

The present invention also relates to a photochromic article that comprises: (a) a substrate; and (b) a photochromic layer over a surface of the substrate, wherein the photochromic layer comprises, (i) a polymer matrix, (ii) a metal salt, (iii) a compound comprising a core structure (or core skeletal structure) represented by Formula (I) as described above; and (iv) optionally a photochromic compound. An activated state absorption spectrum of the photochromic article comprises a peak (or narrow peak) comprising: a maximum (or peak) absorbance at a second wavelength; a first absorbance at a first wavelength that is 20 nm less than the second wavelength; and a third absorbance at a third wavelength that is 20 nm greater than the second wavelength, where the first absorbance and the third absorbance are each independently less than 85% of the maximum (or peak) absorbance.

The features that characterize the present invention are pointed out with particularity in the claims, which are annexed to and form a part of this disclosure. These and other features of the invention, its operating advantages and the specific objects obtained by its use will be more fully understood from the following detailed description in which non-limiting embodiments of the invention are illustrated and described.

### BRIEF DESCRIPTION OF THE DRAWINGS

FIG. 1 is a representative side elevational sectional view of a photochromic article according to an embodiment of the present invention;
FIG. 2 is a representative side elevational sectional view of a photochromic article according to the present invention that includes first and second substrates, and a photochromic layer interposed therebetween; and
FIG. 3 is a graphical representation of a normalized activated state absorption spectrum of a photochromic article according to the present invention, where normalized activated absorbance is plotted as a function of wavelength, as described with regard to Example 2-1 herein.

In FIG's 1 - 3 like characters refer to the same components and/or elements, as the case may be, unless otherwise stated.

### DETAILED DESCRIPTION

As used herein, the articles "a," "an," and "the" include plural referents unless otherwise expressly and unequivocally limited to one referent.

Unless otherwise indicated, all ranges or ratios disclosed herein are to be understood to encompass any and all subranges or subratios subsumed therein. For example, a stated range or ratio of "1 to 10" should be considered to include any and all subranges between (and inclusive of) the minimum value of 1 and the maximum value of 10; that is, all subranges or subratios beginning with a minimum value of 1 or more and ending with a maximum value of 10 or less, such as but not limited to, 1 to 6.1, 3.5 to 7.8, and 5.5 to 10.

As used herein, unless otherwise indicated, left-to-right representations of linking groups, such as divalent linking groups, are inclusive of other appropriate orientations, such as, but not limited to, right-to-left orientations. For purposes of non-limiting illustration, the left-to-right representation of the divalent linking group 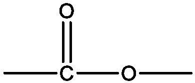 or equivalently -C(O)O-, is inclusive of the right-to-left representation thereof, 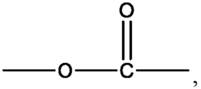 or equivalently -O(O)C- or -OC(O)-.

Other than in the operating examples, or where otherwise indicated, all numbers expressing quantities of ingredients, reaction conditions, and so forth used in the specification and claims are to be understood as modified in all instances by the term "about."

As used herein, the term "polymer" means homopolymers (e.g., prepared from a single monomer species), copolymers (e.g., prepared from at least two monomer species), and graft polymers.

As used herein, the term "(meth)acrylate" and similar terms, such as "(meth)acrylic acid ester" means methacrylates and/or acrylates. As used herein, the term "(meth)acrylic acid" means methacrylic acid and/or acrylic acid.

The compounds of the photochromic layer, such as described herein with reference to Formulas (I), (II), (III), and (IV), can optionally further include one or more coproducts, resulting from the synthesis of such compounds.

As used herein, the term "photochromic" and similar terms, such as "photochromic compound" means having an absorption spectrum for at least visible radiation that varies in response to absorption of at least actinic radiation. Further, as used herein the term "photochromic material" means any substance that is adapted to display photochromic properties (such as, adapted to have an absorption spectrum for at least visible radiation that varies in response to absorption of at least actinic radiation) and which includes at least one photochromic compound.

As used herein, the term "actinic radiation" means electromagnetic radiation that is capable of causing a response in a material, such as, but not limited to, transforming a photochromic material from one form or state to another as will be discussed in further detail herein.

As used herein, the term "photochromic material" includes thermally reversible photochromic materials and compounds and non-thermally reversible photochromic materials and compounds. The term "thermally reversible photochromic compounds/materials" as used herein means compounds/materials capable of converting from a first state, for example a "clear state," to a second state, for example a "colored state," in response to actinic radiation, and reverting back to the first state in response to thermal energy. The term "non-thermally reversible photochromic compounds/materials" as used herein means compounds/materials capable of converting from a first state, for example a "clear state," to a second state, for example a "colored state," in response to actinic radiation, and reverting back to the first state in response to actinic radiation of substantially the same wavelength(s) as the absorption(s) of the colored state (e.g., discontinuing exposure to such actinic radiation).

As used herein to modify the term "state," the terms "first" and "second" are not intended to refer to any particular order or chronology, but instead refer to two different conditions or properties. For purposes of non-limiting illustration, the first state and the second state of a compound according to the present invention and/or photochromic compound can differ with respect to at least one optical property, such as but not limited to the absorption of visible and/or UV radiation. Thus, according to various non-limiting embodiments disclosed herein, the compounds of the present invention (including photochromic compounds) can have a different absorption spectrum in each of the first and second state. For example, while not limiting herein, a compound according to the present invention (including a photochromic compound) can be clear in the first state and colored in the second state. Alternatively, a compound according to the present invention (including a photochromic compound) can have a first color in the first state and a second color in the second state.

As used herein the term "optical" means pertaining to or associated with light and/or vision. For example, according to various non-limiting embodiments disclosed herein, the optical article or element or device can be chosen from ophthalmic articles, elements and devices, display articles, elements and devices, windows, mirrors, and active and passive liquid crystal cell articles, elements and devices.

As used herein the term "ophthalmic" means pertaining to or associated with the eye and vision. Non-limiting examples of ophthalmic articles or elements include corrective and non-corrective lenses, including single vision or multi-vision lenses, which can be either segmented or non-segmented multi-vision lenses (such as, but not limited to, bifocal lenses, trifocal lenses and progressive lenses), as well as other elements used to correct, protect, or enhance (cosmetically or otherwise) vision, including without limitation, contact lenses, intra-ocular lenses, magnifying lenses, and protective lenses or visors.

As used herein the term "display" means the visible or machine-readable representation of information in words, numbers, symbols, designs or drawings. Non-limiting examples of display elements include screens, monitors, and security elements, such as security marks.

As used herein the term "window" means an aperture adapted to permit the transmission of radiation there-through. Non-limiting examples of windows include automotive and aircraft transparencies, windshields, filters, shutters, and optical switches.

As used herein the term "mirror" means a surface that specularly reflects a large fraction of incident light.

As used herein the term "liquid crystal cell" refers to a structure containing a liquid crystal material that is capable of being ordered. A non-limiting example of a liquid crystal cell element is a liquid crystal display.

All documents, such as but not limited to issued patents and patent applications, referred to herein, and unless otherwise indicated, are to be considered to be "incorporated by reference" in their entirety.

The term "alkyl" as used herein means: linear or branched alkyl, such as linear or branched C₁-C₂₅ alkyl; and cycloalkyl, such as C₃-C₁₂ cycloalkyl. Linear or branched alkyl can include C₁-C₂₅ alkyl, such as C₁-C₂₀ alkyl, such as C₂-C₁₀ alkyl, such as C₁-C₁₂ alkyl, such as C₁-C₆ alkyl. Examples of alkyl groups from which the various alkyl groups of the present invention can be selected from, include, but are not limited to, those recited further herein.

The term "alkenyl" as used herein means: linear or branched alkenyl, such as linear or branched C₂-C₂₅ alkenyl; and non-aromatic cycloalkenyl, such as C₄-C₁₂ cycloalkenyl. Examples and classes of alkenyl group and cycloalkenyl groups include those classes of alkyl and cycloalkyl groups as recited herein, which include at least one ethylenically unsaturated group.

The term "alkynyl" as used herein means: linear or branched alkynyl, such as linear or branched C₂-C₂₅ alkynl; and cycloalkynyl, such as C₅-C₁₂ cycloalkynyl. Examples and classes of alkynyl group and cycloalkynyl groups include those classes of alkyl and cycloalkyl groups as recited herein, which include at least one carbon-carbon triple bond group.

The term "cycloalkyl" as used herein means groups that are appropriately cyclic, such as, but not limited to, C₃-C₁₂ cycloalkyl (including, but not limited to, cyclic C₃-C₁₀ alkyl, or cyclic C₅-C₇ alkyl) groups. Examples of cycloalkyl groups include, but are not limited to, those recited further herein. The term "cycloalkyl" as used herein also includes: bridged ring polycycloalkyl groups (or bridged ring polycyclic alkyl groups), such as, but not limited to, bicyclo[2.2.1]heptyl (or norbornyl) and bicyclo[2.2.2]octyl; and fused ring polycycloalkyl groups (or fused ring polycyclic alkyl groups), such as, but not limited to, octahydro-1H-indenyl, and decahydronaphthalenyl.

The term "heterocycloalkyl" as used herein means groups that are appropriately cyclic, such as, but not limited to, C₂-C₁₂ heterocycloalkyl groups, such as C₂-C₁₀ heterocycloalkyl groups, such as C₅-C₇ heterocycloalkyl groups, and which have at least one hetero atom in the cyclic ring, such as, but not limited to, O, S, N, P, and combinations thereof. Examples of heterocycloalkyl groups include, but are not limited to, imidazolyl, tetrahydrofuranyl, tetrahydropyranyl, piperidinyl, morpholinyl, and piperazinyl. The term "heterocycloalkyl" as used herein also includes: bridged ring polycyclic heterocycloalkyl groups, such as, but not limited to, 7-oxabicyclo[2.2.1]heptanyl; and fused ring polycyclic heterocycloalkyl groups, such as, but not limited to, octahydrocyclopenta[b]pyranyl, and octahydro-1H-isochromenyl.

The term "nitrogen-containing heterocycle" as used herein, means a cyclic ring that includes at least one nitrogen atom in the ring, such as one or two nitrogen atoms, and optionally at least one additional heteroatom that is other than nitrogen, such as oxygen, and which with some embodiments is covalently bonded to another group, such as the compound represented by Formulas (I)-(IV) according to the present invention, through a nitrogen atom in the ring. Examples of nitrogen-containing heterocycles include, but are not limited to: cyclic aminos, such as piperidino, pyrrolidino, piperazino, and morpholino; cyclic amides (or lactams), such as C₃-C₆ cyclic amides, such as β-propiolactam, γ-butyrolactam, δ-valerolactam, or ε-caprolactam; and heteroaromatics, such as imidazole, pyrrole, indole, and carbazole.

The descriptions, classes, and examples provided herein with regard to alkyl groups, cycloalkyl groups, heterocycloalkyl groups, haloalkyl groups, and the like, are also applicable to alkane groups, cycloalkane groups, heterocycloalkane groups, haloalkane groups, etc., such as, but not limited to, polyvalent alkane groups, such as polyvalent alkane linking groups, such as divalent alkane linking groups.

As used herein, the term "aryl" and related terms, such as "aryl group", means an aromatic cyclic monovalent hydrocarbon radical. As used herein, the term "aromatic" and related terms, such as "aromatic group," means a cyclic conjugated hydrocarbon having stability (due to delocalization of pi-electrons) that is significantly greater than that of a hypothetical localized structure. Examples of aryl groups include C₆-C₁₄ aryl groups, such as, but not limited to, phenyl, naphthyl, phenanthryl, and anthracenyl.

The term "heteroaryl", as used herein, includes, but is not limited to, C₃-C₁₈ heteroaryl, such as, but not limited to, C₃-C₁₀ heteroaryl (including fused ring polycyclic heteroaryl groups) and means an aryl group having at least one hetero atom in the aromatic ring, or in at least one aromatic ring in the case of a fused ring polycyclic heteroaryl group. Examples of heteroaryl groups include, but are not limited to, furanyl, pyranyl, pyridinyl, quinolinyl, isoquinolinyl, and pyrimidinyl.

Representative alkyl groups include, but are not limited to, methyl, ethyl, propyl, isopropyl, butyl, isobutyl, sec-butyl, tert-butyl, pentyl, neopentyl, hexyl, heptyl, octyl, nonyl and decyl. Representative alkenyl groups include, but are not limited to, vinyl, allyl, and propenyl. Representative alkynyl groups include, but are not limited to, ethynyl, 1-propynyl, 2-propynyl, 1-butynyl, and 2-butynyl. Representative cycloalkyl groups include, but are not limited to, cyclopropyl, cyclobutyl, cyclopentyl, cyclohexyl, cycloheptyl, and cyclooctyl.

As used herein, the term "halo" and related terms, such as "halo group," "halo substituent," "halogen group," and "halogen substituent," means a single bonded halogen group, such as -F, -Cl, -Br, and -I.

As used herein, recitations of "halo substituted" and related terms (such as, but not limited to, haloalkyl groups, haloalkenyl groups, haloalkynyl groups, haloaryl groups, and halo-heteroaryl groups) means a group in which at least one, and up to and including all of the available hydrogen groups thereof is substituted with a halo group, such as, but not limited to F, Cl or Br. The term "halo-substituted" is inclusive of "perhalo-substituted."

As used herein, recitations of "perfluoroalkyl group" means an alkyl group in which all available hydrogen groups thereof have in each case been substituted (or replaced) with a fluoro (F) group.

As used herein, "at least one of" is synonymous with "one or more of," whether the elements are listed conjunctively or disjunctively. For example, the phrases "at least one of A, B, and C" and "at least one of A, B, or C" each mean any one of A, B, or C, or any combination of any two or more of A, B, or C. For example, A alone; or B alone; or C alone; or A and B; or A and C; or B and C; or all of A, B, and C.

As used herein, "selected from" is synonymous with "chosen from" whether the elements are listed conjunctively or disjunctively. Further, the phrases "selected from A, B, and C" and "selected from A, B, or C" each mean any one of A, B, or C, or any combination of any two or more of A, B, or C. For example, A alone; or B alone; or C alone; or A and B; or A and C; or B and C; or all of A, B, and C.

As used herein, and in accordance with some embodiments, the term "ketone" such as with regard to groups, and substituents of various groups, of the photochromic compounds of the present invention, and related terms, such as "ketone group" and "ketone substituent", includes a material represented by -C(O)R, where R is selected from those groups as described below.

As used herein, and in accordance with some embodiments, the term "carboxylic acid" such as with regard to groups, and substituents of various groups, of the photochromic compounds of the present invention, and related terms, such as "carboxylic acid group" and "carboxylic acid substituent" includes a material represented by -C(O)OH.

As used herein, and in accordance with some embodiments, the term "ester" such as with regard to groups, and substituents of various groups, of the compounds and components of the present invention, and related terms, such as "ester group" and "ester substituent" means a carboxylic acid ester group represented by -C(O)OR, where R is selected from those groups as described below.

As used herein, and in accordance with some embodiments, the term "carbonate" such as with regard to groups, and substituents of various groups, of the compounds and components of the present invention, and related terms, such as "carbonate group" and "carbonate substituent" includes a material represented by -OC(O)OR, where R is selected from those groups as described below.

As used herein, and in accordance with some embodiments, the term "urethane," such as with regard to groups, and substituents of various groups, of the compounds and components of the present invention, and related terms, such as "urethane group," and "urethane substituent," includes a material represented by -OC(O)N(R)(H) or -N(H)C(O)OR, where R in each case is independently selected from those groups as described below.

Unless otherwise stated, each R group of each of the above described ketone, ester (carboxylic acid ester), carbonate, and urethane groups, is in each case independently selected from alkyl, haloalkyl, perhaloalkyl, cycloalkyl, heterocycloalkyl, aryl, heteroaryl, and combinations thereof (including those classes and examples thereof as recited previously herein).

The compounds of the present invention, such as, but not limited to those represented by Formulas (I) through (IV), and the various groups thereof are described in further detail herein as follows.

As used herein, recitations of "substituted" group, with regard to the compounds of the present invention, such as represented by Formulas (I) through (IV), means a group including, but not limited to, alkyl group, heterocycloalkyl group, aryl group, and/or heteroaryl group, in which at least one hydrogen thereof has been replaced or substituted with a group that is other than hydrogen. The substituents of the "substituted" groups of the compounds of the present invention, such as represented by Formulas (I) through (IV), with some embodiments, are in each case independently selected from: alkoxy groups; halo groups (e.g., F, Cl, I, and Br); hydroxyl groups; thiol groups; alkylthio groups; arylthio groups; ketone groups; aldehyde groups; ester groups; carboxylic acid groups; cyano groups; alkyl groups; alkenyl groups; alkynyl groups; haloalkyl groups; perhaloalkyl groups; cycloalkyl groups; heterocycloalkyl groups; aryl groups (including alkaryl groups, including hydroxyl substituted aryl, such as phenol, and including poly-fused-ring aryl); heteroaryl groups (including poly-fused-ring heteroaryl groups); amino groups, such as -N(R^{11'})(R^{12'}) where R^{11'} and R^{12'} are each independently selected from, for example, hydrogen, alkyl, heterocycloalkyl, aryl, or heteroaryl; carboxylate groups; amide groups; urethane groups; carbonate groups; urea groups; vinylphenyl groups; acrylate groups; methacrylate groups; acrylamide groups; methacrylamide groups; nitrogen-containing heterocycles; or combinations thereof, including those classes and examples as described further herein. With some further embodiments, the substituents of the "substituted" groups of the compounds according to the present invention, are in each case independently selected from: alkoxy groups; halo groups (e.g., F, Cl, I, and Br); hydroxyl groups; thiol groups; ketone groups; aldehyde groups; ester groups; carboxylic acid groups; cyano groups; alkyl groups; haloalkyl groups; perhaloalkyl groups; cycloalkyl groups; heterocycloalkyl groups; aryl groups; and heteroaryl groups. In accordance with some embodiments of the present invention, the substituents of a substituted group are more particularly recited.

The substituents of the substituted groups of the compounds according to the present invention, such as represented by Formulas (I)-(IV), are with some embodiments, selected from: alkyl groups (such as linear or branched C₁-C₂₅, C₁-C₁₀, or C₁-C₆ alkyl groups, and C₃-C₁₂ cycloalkyl groups); hydroxyl groups (-OH); thiol groups (-SH); alkoxy groups (-O-alkyl; such as linear or branched C₁-C₂₅, C₁-C₁₀, or C₁-C₆ alkoxy groups, and C₃-C₁₂ cycloalkoxy groups); alkylthio groups (-S-alkyl; such as linear or branched C₁-C₂₅, C₁-C₁₀, or C₁-C₆ alkylthio groups, and C₃-C₁₂ cycloalkylthio groups); aryloxy groups (-O-Aryl, such as phenyloxy and naphthyloxy groups); arylthio groups (-S-Aryl, such as phenylthio and naphthylthio groups); aryl groups (such as phenyl, naphthyl, and anthracenyl groups); halo groups (such as F, Br, and Cl); cyano groups (-CN); nitro groups (-NO₂); and perhalo alkyl groups (such as linear or branched perhalo C₁-C₂₅, C₁-C₁₀, or C₁-C₆ alkyl groups, and perhalo C₃-C₁₂ cycloalkyl groups).

The compounds of the present invention are described herein as including (or having) a core skeletal structure represented by a formula, such as Formulas (I) through (IV). As used herein, the terms core skeletal structure and core structure, with regard to the compound(s), are used interchangeably.

With reference to Formula (I), and in accordance with some embodiments, Ring-A and Ring-B each independently include phenyl substituted with at least one electron donating group. In accordance with some embodiments, each electron donating group of Ring-A and Ring-B is in each case independently selected from an electron donating group represented by Formulas (A), (B), (C), (D), (E), or (F), as described in further detail herein with regard to Formula (II).

With additional reference to Formula (I), and in accordance with some embodiments, Ring-C includes (or, with some embodiments, is): unsubstituted phenyl; substituted phenyl; unsubstituted heteroaryl, where the heteroaryl is selected from furanyl, pyranyl, pyridinyl, quinolinyl, isoquinolinyl, and pyrimidinyl; or substituted heteroaryl, where the heteroaryl is selected from furanyl, pyranyl, pyridinyl, quinolinyl, isoquinolinyl, and pyrimidinyl. In accordance with some embodiments, Ring-C, of Formula (I), is represented by Formula (G), as described in further detail herein, such as with regard to Formula (II).

With further reference to Formula (I), and in accordance with some embodiments, when Q is C-OH, Ring-D includes (or, with some embodiments, is) unsubstituted phenyl (aside from the hydroxyl group of Q being C-OH), or substituted phenyl (in addition to the hydroxyl group of Q being C-OH). With additional reference to Formula (I), and with some embodiments, when Q is N, Ring-D includes (or, with some embodiments, is) unsubstituted heteroaryl or substituted heteroaryl, where the heteroaryl optionally includes at least one further heteroatom (in addition to the N of Q) such as O, N, and S. In accordance with some embodiments, when Q is N, Ring-D includes no further heteroatoms in the ring. With some further embodiments, when Q is N, Ring-D includes (or, with some embodiments, is) unsubstituted pyridinyl or substituted pyridinyl. With some embodiments, Ring-D of Formula-(I) is represented by Formula (H) as described in further detail herein, such as with regard to Formula (II).

With reference to Formula (I), and in accordance with some embodiments, X is S, C(R^{a})(R^{b}), or Si(R^{c})(R^{d}), where R^{a}, R^{b}, R^{c}, and R^{d} are in each case independently: unsubstituted alky (such as unsubstituted linear or branched C₁-C₂₅, C₁-C₁₀, or C₁-C₆ alkyl, or C₃-C₁₂ cycloalkyl); unsubstituted phenyl; or substituted phenyl (such as phenyl substituted with perfluoroalkyl, such as linear or branched C₁-C₂₅, C₁-C₁₀, or C₁-C₆ perfluoroalkyl).

With reference to Formula (I), and in accordance with some embodiments, Ring-A and Ring-B each independently include aryl fused with at least one amine containing heterocycloalkyl ring that is electron donating. With some further embodiments, Ring-A and Ring-B of Formula (I) each independently include phenyl fused with at least one amine (or nitrogen) containing heterocycloalkyl ring, each including 2 to 3 carbon atoms, that is electron donating, such as described in further detail herein with reference to Formula (III). In accordance with some embodiments, Ring-A and Ring-B of Formula (I) each independently include phenyl fused with two fused heterocycloalkyl rings, each including 2 to 3 carbon atoms, that together include (or share) a nitrogen, that are together electron donating, such as described in further detail herein with reference to Formula (IV).

In accordance with some embodiments of the present invention, the compound of the present invention, includes a core skeletal structure represented by the following Formula (II),

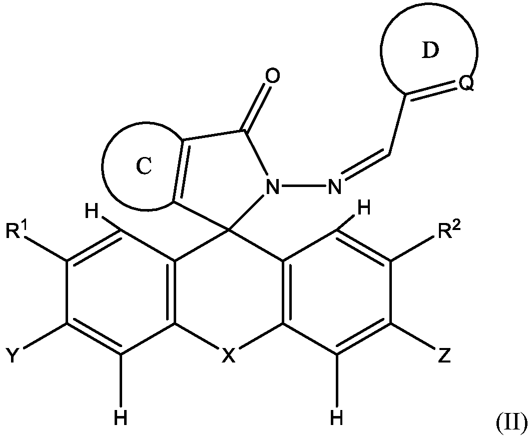

With reference to Formula (II), X is as described previously herein with reference to Formula (I). With some further embodiments, X, of Formula (II), is S, C(R^{a})(R^{b}), or Si(R^{c})(R^{d}), where R^{a}, R^{b}, R^{c}, and R^{d} are in each case independently unsubstituted alkyl (such as unsubstituted linear or branched C₁-C₂₅, C₁-C₁₀, or C₁-C₆ alkyl, or C₃-C₁₂ cycloalkyl).

With further reference to Formula (II), Y and Z are each independently the electron donating group, as described previously herein with regard to Rings A and B of Formula (I).

With additional reference to Formula (II), R¹ and R² are each independently selected from hydrogen, alkyl, or halogen. With some embodiments, R¹ and R², of Formula (II), are each independently selected from: hydrogen; unsubstituted alkyl (such as unsubstituted linear or branched C₁-C₂₅, C₁-C₁₀, or C₁-C₆ alkyl, or C₃-C₁₂ cycloalkyl); or halogen, such as F, Br, or Cl.

In accordance with some embodiments, and with reference to Formula (II), the electron donating group from which Y and Z are each independently selected from, is in each case independently represented by the following Formulas (A), (B), (C), (D), (E), or (F).

With reference to Formula (II), and with some embodiments, the electron donating group from which Y and Z are each independently selected from, is in each case independently represented by the following Formula (A):

-OR³ (A)

With reference to Formula (A), and with some embodiments, R³ in each case is independently: hydrogen; unsubstituted or substituted alkyl; -Si(R¹⁰)₃ where each R¹⁰ is independently unsubstituted or substituted alkyl; or unsubstituted or substituted aryl. In accordance with some further embodiments, and with reference to Formula (A), R³ in each case is independently: hydrogen; unsubstituted alkyl (such as unsubstituted linear or branched C₁-C₂₅, C₁-C₁₀, or C₁-C₆ alkyl, or C₃-C₁₂ cycloalkyl); -Si(R¹⁰)₃ where each R¹⁰ is independently unsubstituted alkyl (such as unsubstituted linear or branched C₁-C₂₅, C₁-C₁₀, or C₁-C₆ alkyl, or C₃-C₁₂ cycloalkyl); or unsubstituted or substituted phenyl.

With reference to Formula (II), and with some embodiments, the electron donating group from which Y and Z are each independently selected from, is in each case independently represented by the following Formula (B):

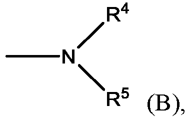

With reference to Formula (B), R⁴ and R⁵ are in each case independently hydrogen; unsubstituted or substituted alkyl; -OR¹¹ where R¹¹ is unsubstituted or substituted alkyl, or unsubstituted or substituted aryl; unsubstituted or substituted aryl; or R⁴ and R⁵ together form an optionally substituted alkyl ring that optionally includes a heteroatom; or R⁴ and R⁵ together form an optionally substituted polycyclic bridged alkyl ring that optionally includes a heteroatom.

With further reference to Formula (B), and with some embodiments, R⁴ and R⁵ are in each case independently hydrogen; unsubstituted alkyl (such as unsubstituted linear or branched C₁-C₂₅, C₁-C₁₀, or C₁-C₆ alkyl, or C₃-C₁₂ cycloalkyl); -OR¹¹ where R¹¹ is unsubstituted alkyl, or unsubstituted or substituted phenyl; unsubstituted or substituted phenyl; or R⁴ and R⁵ together form an optionally substituted alkyl ring (such as containing 2 to 10, or 2 to 8, or 2 to 6 carbon atoms) that optionally includes a heteroatom (other than the N to which R⁴ and R⁵ are bonded), such as at least one of N, S, or O; or R⁴ and R⁵ together form an optionally substituted polycyclic bridged alkyl ring that optionally includes a heteroatom, such as at least one of N, S, or O (other than the N to which R⁴ and R⁵ are bonded).

With some embodiments, R⁴ and R⁵ of Formula (B) together form an optionally substituted alkyl ring containing 2 to 10 carbon atoms (or 2 to 8 carbon atoms, or 2 to 6 carbon atoms), such as optionally substituted aziridinyl, optionally substituted azetidinyl, optionally substituted pyrrolidinyl, and optionally substituted piperidinyl.

With some additional embodiments, examples of optionally substituted polycyclic bridged alkyl rings that R⁴ and R⁵ of Formula (B) together form include, but are not limited to: optionally substituted azabicyclo[2.2.1]heptanyl; and optionally substituted azabicyclo[2.2.2]octanyl.

In accordance with some embodiments, Formulas (C), (D), (E), and (F) from which Y and Z of Formula (II) are each independently selected, are provided as follows:

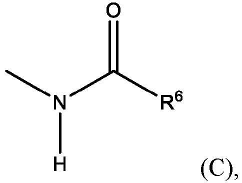

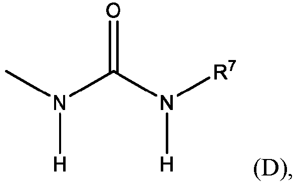

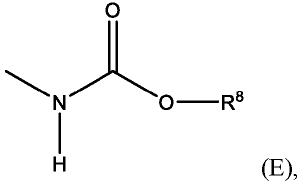

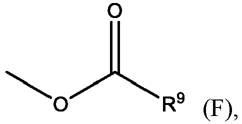

With reference to Formulas (C), (D), (E), and (F), R⁶, R⁷, R⁸, and R⁹ are in each case independently unsubstituted or substituted alkyl; or unsubstituted or substituted aryl. With further reference to Formulas (C), (D), (E), and (F), and in accordance with some embodiments, R⁶, R⁷, R⁸, and R⁹ are in each case independently: unsubstituted or substituted linear or branched C₁-C₂₅, C₁-C₁₀, or C₁-C₆ alkyl, or C₃-C₁₂ cycloalkyl; or unsubstituted or substituted phenyl.

With reference to Formula (II), and in accordance with some embodiments of the present invention, Ring-C is represented by the following Formula (G),

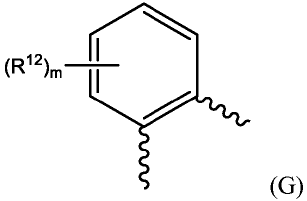

With reference to Formula (G), subscript m is 0 to 4, and R¹² for each m is independently selected from: halogen (such as F, Br, and Cl); unsubstituted alkyl (such as unsubstituted linear or branched C₁-C₂₅, C₁-C₁₀, or C₁-C₆ alkyl, or C₃-C₁₂ cycloalkyl); perhalo alkyl, (such as perhalo linear or branched C₁-C₂₅, C₁-C₁₀, or C₁-C₆ alkyl, or perhalo C₃-C₁₂ cycloalkyl); unsubstituted or substituted aryl (such as unsubstituted or substituted phenyl); -OR¹³, where R¹³ is hydrogen, unsubstituted or substituted alkyl (such as unsubstituted or substituted linear or branched C₁-C₂₅, C₁-C₁₀, or C₁-C₆ alkyl, or C₃-C₁₂ cycloalkyl), or unsubstituted or substituted aryl (such as unsubstituted or substituted phenyl); -NO₂; -N(R¹⁴)₂ where each R¹⁴ is independently hydrogen, unsubstituted or substituted alkyl (such as unsubstituted or substituted linear or branched C₁-C₂₅, C₁-C₁₀, or C₁-C₆ alkyl, or C₃-C₁₂ cycloalkyl), or unsubstituted or substituted aryl (such as unsubstituted or substituted phenyl); an N-bonded unsubstituted or substituted nitrogen containing ring; or two adjacent R¹² groups together form an optionally substituted fused alkyl ring that optionally includes at least one heteroatom in the ring (such as O, S, or NR¹⁴).

With reference to Formula (G), examples of N-bonded unsubstituted or substituted nitrogen containing rings, from which R¹² may be selected from include, but are not limited to: N-bonded pyrrole; N-bonded pyrazole; N-bonded 1,2,3-triazole; and N-bonded 1,2,4-triazole.

With reference to Formula (G), examples of optionally substituted fused alkyl rings that optionally include at least one heteroatom, that two adjacent R¹² groups together form, include, but are not limited to: fused alkyl rings including 3 to 6 carbon atoms, that are free of heteroatoms in the ring; fused tetrahydrofuran rings; fused dioxolane rings; fused pyran rings; fused dioxane rings; fused tetrahydrothiophene rings; fused dithiolane rings; fused thiopyran rings; and fused dithiane rings.

With reference to Formula (II), and in accordance with some embodiments of the present invention, Ring-D is represented by the following Formula (H),

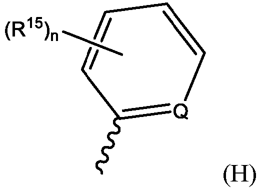

With reference to Formula (H), subscript n is 0 to 4, and R¹⁵ for each n is independently selected from: halogen (such as F, Br, and Cl); unsubstituted alkyl including at least one ethylenically unsaturated group (such as unsubstituted linear or branched C₁-C₂₅, C₁-C₁₀, or C₁-C₆ alkyl, or C₃-C₁₂ cycloalkyl, each including at least one ethylenically unsaturated group); perhalo alkyl (such as perhalo linear or branched C₁-C₂₅, C₁-C₁₀, or C₁-C₆ alkyl, or perhalo C₃-C₁₂ cycloalkyl); unsubstituted or substituted cycloalkyl optionally including at least one heteroatom; unsubstituted or substituted aryl; -OR¹⁶, where R¹⁶ is hydrogen, unsubstituted or substituted alkyl, or unsubstituted or substituted aryl; -NO₂; -N(R¹⁷)₂ where each R¹⁷ is independently hydrogen, unsubstituted or substituted alkyl, or unsubstituted or substituted aryl; or at least one R¹⁵ group forms a fused alkyl ring with an adjacent Ring-D carbon of Formula (H); a polyalkylene ether; or a group represented by the following Formula (J),

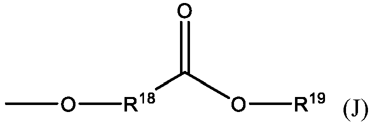

With reference to Formula (J): R¹⁸ is selected from a divalent unsubstituted alkane, or a divalent unsubstituted aryl (such as divalent unsubstituted phenyl); and R¹⁹ is selected from hydrogen, unsubstituted alkyl (such as unsubstituted linear or branched C₁-C₂₅, C₁-C₁₀, or C₁-C₆ alkyl, or C₃-C₁₂ cycloalkyl), or unsubstituted aryl (such as unsubstituted phenyl).

In accordance with some embodiments, and with reference to Formula (H), two adjacent R¹⁵ groups together form an optionally substituted fused aryl ring (such as an optionally substituted fused phenyl ring or fused naphthyl ring).

The compound, with some embodiments, is represented by the following Formula (IIa),

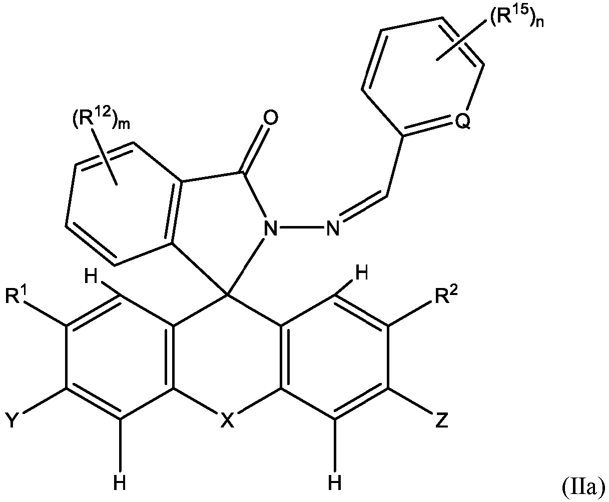

With reference to Formula (IIa), X, Y, Z, Q, R¹, R², m, n, R¹², and R¹⁵ are each independently as described previously herein with regard to Formulas (II), (A)-(F), (G), and (H).

In accordance with some embodiments of the present invention, the compound of the present invention, includes a core skeletal structure represented by the following Formula (III),

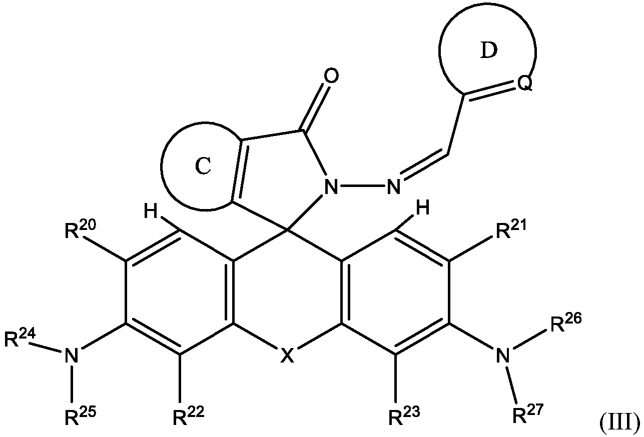

With reference to Formula (III), X is, with some embodiments, as described previously herein with regard to Formulas (I) and (II). With some embodiments, X of Formula (III) is S, C(R^{a})(R^{b}), or Si(R^{c})(R^{d}), wherein R^{a}, R^{b}, R^{c}, and R^{d} are in each case independently unsubstituted alkyl (such as unsubstituted linear or branched C₁-C₂₅, C₁-C₁₀, or C₁-C₆ alkyl, or C₃-C₁₂ cycloalkyl).

With further reference to Formula (III), R²⁰ and R²¹ are each independently selected from hydrogen, unsubstituted alkyl, or halogen; or at least one of, (i) R²⁰ and R²⁴ together form a fused alkyl ring (with some embodiments, including 3 to 10 carbon atoms, or 3 to 8 carbon atoms, or 3 to 6 carbon atoms in the ring), and/or (ii) R²¹ and R²⁶ together form a fused alkyl ring (with some embodiments, including 3 to 10 carbon atoms, or 3 to 8 carbon atoms, or 3 to 6 carbon atoms in the ring).

With additional reference to Formula (III), R²² and R²³ are each hydrogen, or at least one of, (i) R²² and R²⁵ together form a fused alkyl ring (with some embodiments, including 3 to 10 carbon atoms, or 3 to 8 carbon atoms, or 3 to 6 carbon atoms in the ring), and/or (ii) R²³ and R²⁷ together form a fused alkyl ring (with some embodiments, including 3 to 10 carbon atoms, or 3 to 8 carbon atoms, or 3 to 6 carbon atoms in the ring).

With further reference to Formula (III), R²⁴, R²⁵, R²⁶, and R²⁷ are each independently selected from: hydrogen; unsubstituted or substituted alkyl (such as unsubstituted linear or branched C₁-C₂₅, C₁-C₁₀, or C₁-C₆ alkyl, or C₃-C₁₂ cycloalkyl); -OR²⁸ where R²⁸ is unsubstituted or substituted alkyl (such as unsubstituted or substituted linear or branched C₁-C₂₅, C₁-C₁₀, or C₁-C₆ alkyl, or C₃-C₁₂ cycloalkyl), unsubstituted or substituted aryl (such as unsubstituted or substituted phenyl or naphthyl); or unsubstituted or substituted aryl (such as unsubstituted or substituted phenyl or naphthyl).

With further reference to Formula (III), and in accordance with some embodiments, at least one of: R²⁴ and R²⁵ together form an optionally substituted alkyl ring (including, with some embodiments, 3 to 6 carbon atoms in the alkyl ring) that optionally includes a heteroatom (other than the N to which R²⁴ and R²⁵ are bonded, such as O or S); and/or R²⁶ and R²⁷ together form an optionally substituted alkyl ring (including, with some embodiments, 3 to 6 carbon atoms in the alkyl ring) that optionally includes a heteroatom (other than the N to which R²⁶ and R²⁷ are bonded, such as O or S).

With reference to Formula (III), and in accordance with some embodiments, Ring-C is as described previously herein with reference to Formula (I). With some additional embodiments, Ring-C of Formula (III), is represented by Formula (G), as described previously herein with reference to Formula (II).

In accordance with some embodiments, and with reference to Formula (III), Ring-D is as described previously herein with reference to Formula (I). With some additional embodiments, Ring-D of Formula (III), is represented by Formula (H), as described previously herein with reference to Formula (II).

The compound, with some embodiments, is represented by the following Formula (IIIa),

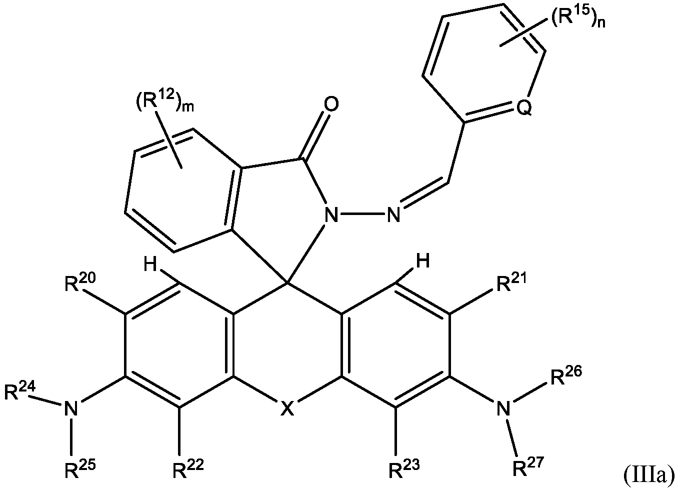

With reference to Formula (IIIa), X, Q, m, n, R¹², R¹⁵, and R²⁰-R²⁷ are each independently as described previously herein with regard to Formulas (III), (G), and (H).

In accordance with some embodiments of the present invention, the compound includes a core skeletal structure represented by the following Formula (IV),

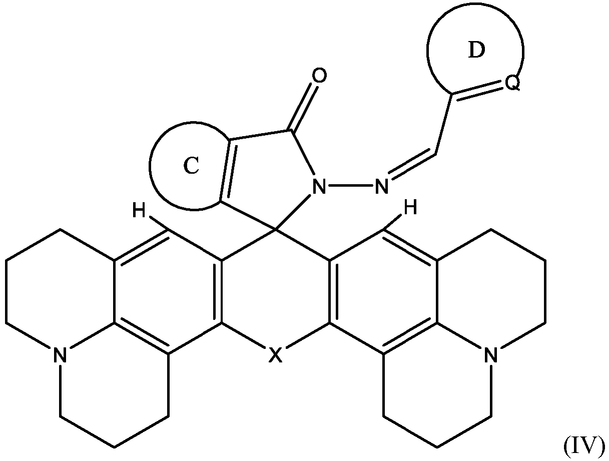

With reference to Formula (IV), X is, with some embodiments, as described previously herein with regard to Formulas (I), (II), and (III). With some embodiments, X of Formula (IV) is S, C(R^{a})(R^{b}), or Si(R^{c})(R^{d}), wherein R^{a}, R^{b}, R^{c}, and R^{d} are in each case independently unsubstituted alkyl (such as unsubstituted linear or branched C₁-C₂₅, C₁-C₁₀, or C₁-C₆ alkyl, or C₃-C₁₂ cycloalkyl).

With reference to Formula (IV), and in accordance with some embodiments, Ring-C is as described previously herein with reference to Formula (I). With some additional embodiments, Ring-C of Formula (IV), is represented by Formula (G), as described previously herein with reference to Formula (II).

In accordance with some embodiments, and with reference to Formula (IV), Ring-D is as described previously herein with reference to Formula (I). With some additional embodiments, Ring-D of Formula (IV), is represented by Formula (H), as described previously herein with reference to Formula (II).

The compound, with some embodiments, is represented by the following Formula (IVa),

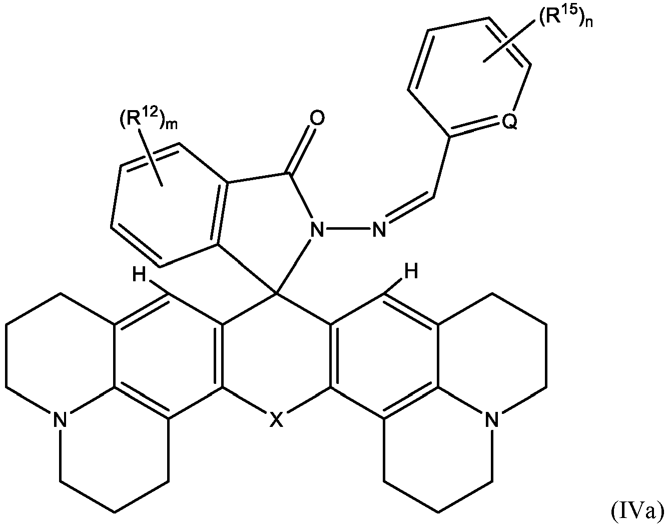

With reference to Formula (IVa), X, Q, m, n, R¹², and R¹⁵ are each independently as described previously herein with regard to Formulas (IV), (G), and (H).

The present invention also relates to a photochromic article that includes: (a) a substrate; and (b) a photochromic layer over a surface of the substrate, where the photochromic layer includes, (i) a polymer matrix, (ii) a metal salt, and (iii) a compound including a core structure (or core skeletal structure) represented by Formula (I) as described previously herein. An activated state absorption spectrum of the photochromic article according to the present invention includes a peak (or narrow peak) that includes: a maximum (or peak) absorbance at a second wavelength; a first absorbance at a first wavelength that is 20 nm less than the second wavelength; and a third absorbance at a third wavelength that is 20 nm greater than the second wavelength, where the first absorbance and the third absorbance are each independently less than 85% of the maximum (or peak) absorbance.

With some embodiments, the compound (iii) of the photochromic article is represented by one or more of Formulas (I), (II), (IIa), (III), (IIIa), (IV), and/or (IVa), in each case as described previously herein.

In accordance with some embodiments, the compound (iii) of the photochromic layer, such as represented by Formulas (I)-(IV), is present in the photochromic layer in an amount of from 0.01 to 40 weight percent, such as from 0.05 to 15 weight percent, such as from 0.1 to 5 weight percent, based on the weight of the photochromic layer.

The photochromic layer of the photochromic article, in accordance with some embodiments of the present invention, includes at least two compounds that are in each case independently represented by Formula (I) (or Formulas II, III, or IV), and which are in each case different from each other, and wherein the activated state absorption spectrum of each compound represented by Formula (I) (or Formulas II, III, or IV) is different from the activated state absorption spectrum of each other compound represented by Formula (I) (or Formulas II, III, or IV).

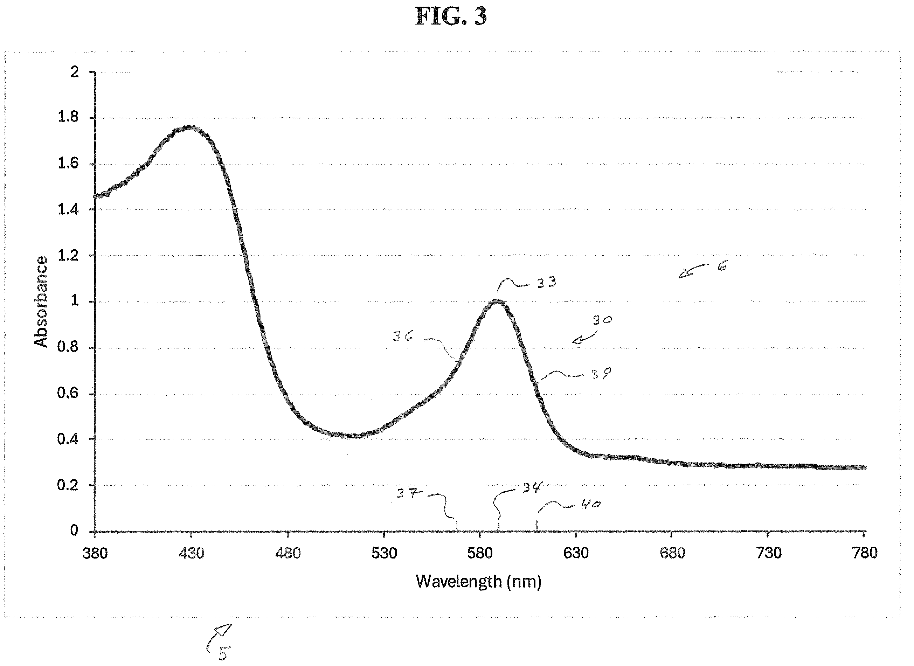

The photochromic articles according to the present invention have an activated state absorption spectrum as described previously herein with reference to Formula (I). For purposes of non-limiting illustration, and with reference to FIG. 3 of the drawings, there is depicted a graphical representation (5) of a normalized activated state absorption spectrum (6) of a photochromic article according to the present invention, as described with regard to Example 1 herein, where absorbance is plotted as a function of wavelength. The activated state absorption spectrum (6) includes a peak (or narrow peak) (30) that includes: a maximum (or peak) absorbance (33) of 1.00 at a second wavelength (34) of 589 nm; a first absorbance (36) of 0.73 at a first wavelength (37) of 569 nm (which is 20 nm less than the second wavelength (34) of 589 nm); and a third absorbance (39) of 0.62 at a third wavelength (40) of 609 nm (which is 20 nm greater than the second wavelength (34) of 589 nm). The first absorbance (36) of 0.73 and the third absorbance (39) of 0.62 are each independently less than 85% of the peak (or maximum) absorbance (33) of 1.00. The narrow peak (30) is due to a compound (iii) according to the present invention represented by Formula (IIIa) as described previously herein, where: X is S; m is 0; Q is C-OH; n is 1; R¹⁵ is -N-(CH₂CH₃)₂ (which is positioned two ring carbons from Q); R²⁰ and R²¹ are each fluoro (-F); R²² and R²³ are each hydrogen (-H); and R²⁴, R²⁵, R²⁶, and R²⁷ are each ethyl (-CH₂CH₃).

The photochromic layer of the photochromic article of the present invention, includes a metal salt. With some embodiments, the metal salt includes zinc, manganese, nickel, tin, or copper. More particularly, the metal salt includes, a metal cation, such as zinc cation (such as Zn²⁺), manganese cation (such as Mn²⁺), nickel cation (such as Ni²⁺), tin cation (such as Sn²⁺), or copper cation (such as Cu²⁺). In addition to the metal cation, the metal salt includes an appropriate counter anion. Examples of appropriate counter anions, that may be included with the metal salt, include, but are not limited to: halides or halide anions (such as F⁻,Cl⁻, and Br⁻); carboxylic acid anions, including perfluoro carboxylic acid anions, such as trifluoroacetate; and acetyl ketonates, including perfluoro acetyl ketonates, such as hexafluoroacetyl acetonate; triflates; and nitrates.

With some embodiments, the metal salt is present in the photochromic layer in an amount of from 0.05 percent by weight to 10 percent by weight, or from 0.1 percent by weight to 5 percent by weight, where the percent weights are based on the total weight of the photochromic layer.

With some embodiments, the equivalents ratio of the compound (iii) (such as represented by Formulas I-IV) to the metal salt is at least 1:0.1. With some further embodiments, the equivalents ratio of the compound (iii) (such as represented by Formulas I-IV) to the metal salt is, from 1:0.1 to 1: 10, or from 1:0.5 to 1:5, or from 1:0.8 to 1:1.2, inclusive of the recited values. With some additional embodiments, the equivalents ratio of the compound (iii) (such as represented by Formulas I-IV) to the metal salt is at least 1:1, such as from 1:1 to 1: 10, or from 1: 1 to 1:5, or from 1: 1 to 1:1.2, inclusive of the recited values.

While not intending to be bound by any theory, and based on the evidence at hand, it is believed that the compound (iii), such as represented by Formulas (I)-(IV), and the metal salt together form a coordination complex (or a coordinated complex). It is further believed that the coordination complex (as between the metal salt and the compound iii) is capable of being converted from a first state (such as a bleached state) to a second state (such as a colored state) having a stabilized open form, which possesses photochromic properties, when exposed to actinic radiation (such as ultraviolet light).

In accordance with some embodiments, the photochromic layer further (or optionally) includes a photochromic compound (iv), which is different than the compound (iii), such as represented by Formulas (I)-(IV). With some embodiments, the photochromic compound (iv) is present in at least one of: the photochromic layer; and/or an optional further photochromic layer, where the optional further photochromic layer is positioned over the photochromic layer or interposed between the substrate and the photochromic layer.

In accordance with some embodiments, the metal salt further includes (or has associated therewith) a ligand. With some embodiments, the ligand includes at least one atom having a lone pair of electrons that is capable of coordinating with the metal salt. With some further embodiments, the ligand includes at least one nitrogen atom (such as one or two nitrogen atoms) each having a lone pair of electrons that is capable of coordinating with the metal salt. The ligand, with some embodiments, is selected from monodentate ligands and/or bidentate ligands. Examples of ligands that can be associated with the metal salt include, but are not limited to: tetraalkyl alkylene diamines, such as tetramethyl ethylene diamine; pyridine; dialkylaminopyridine, such as dimethylaminopyridine , such as 4-dimethylaminopyridine; bipyrdines, such as 2,2'-bipyridine; dialkybipyridines, such as 4,4'-dialkyl-2,2'-bipyridine, such as 4,4'-dinonyl-2,2'-bipyridine; and phenanthroline, such as 1,10-phenanthroline.

In accordance with some embodiments, the photochromic compound (iv) includes at least one of naphthopyrans, benzopyrans, phenanthropyrans, indenonaphthopyrans, spiro(indoline)naphthoxazines, spiro(indoline)pyridobenzoxazines, spiro(benzindoline)pyridobenzoxazines, spiro(benzindoline)naphthoxazines, spiro(indoline)-benzoxazines, fulgides, fulgimides, and/or diarylethenes. Further examples of other photochromic compounds that can be present in photochromic layer of the present invention include, but are not limited to, those disclosed at column 34, line 20 through column 35, line 13 of US 9,028,728 B2, which disclosure is specifically incorporated by reference herein.

With some embodiments, the photochromic compound (iv) is present in at least one of: the photochromic layer; and/or an optional further photochromic layer, where the optional further photochromic layer is positioned over the photochromic layer or interposed between the substrate and the photochromic layer.

With some embodiments, the amount of photochromic compound(s) (iv) present in the photochromic layer is from 0.001 percent by weight to 40 percent by weight, or from 0.001 to 10 percent by weight, or from 0.01 to 8 percent by weight, or from 0.1 to 2.5 percent by weight, where the percent by weights are in each case based on the weight of the photochromic layer.

The photochromic layer of the photochromic article according to the present invention includes a polymer matrix. The polymer matrix, with some embodiments, is a thermoplastic polymer matrix, a cross-linked polymer matrix, or a combination thereof. With some embodiments, the polymer matrix of the photochromic layer is a cross-linked polymer matrix.

Classes and examples of polymers (or polymeric materials), that can be included in the polymer matrix of the photochromic layer, include, but are not limited to: poly(carbonate); copolymers of ethylene and vinyl acetate; copolymers of ethylene and vinyl alcohol; copolymers of ethylene, vinyl acetate, and vinyl alcohol (such as those that result from the partial saponification of copolymers of ethylene and vinyl acetate); cellulose acetate butyrate; poly(urethane); poly(acrylates); poly(methacrylates); epoxies; aminoplast functional polymers; poly(anhydride); poly(urea urethane); N-alkoxymethyl(meth)acrylamide functional polymers; poly(siloxane); poly(silane); polyisocyanurates; and combinations and mixtures thereof. Further classes and examples of polymers (or polymeric materials) that can be included in the polymer matrix of the photochromic layer of the present invention include, but are not limited to, those disclosed at column 39, line 45 through column 40, line 67 of US 9,028,728 B2.

The photochromic layer, with some embodiments, is formed from a photochromic composition that can be thermoplastic or curable (e.g., thermosetting and/or photosetting), and which includes: the metal salt (ii); the compound (iii); optionally the photochromic compound (iv); and at least one of a polymer, a reactive polymer having reactive groups, a monomer that includes one or more ethylenically unsaturated groups, and/or a crosslinker that includes reactive groups that are reactive with (form covalent bonds with) the reactive groups of the reactive polymer, that forms the polymer matrix (i). The photochromic composition, with some embodiments, includes one or more additional materials, such as a photoinitiator, a thermal initiator, a polymerization inhibitor, a solvent, a light stabilizer, a heat stabilizer, a mold release agent, a rheology control agent, a leveling agent, a free radical scavenger, and/or an adhesion promoter. Examples of reactive groups of the reactive polymer, include, but are not limited to: hydroxyls; thiols; primary and/or secondary amines; isocyanate groups; capped or blocked isocyanate groups (that de-cap or de-block at elevated temperature); oxirane groups; carboxylic acid groups; carboxylic acid ester groups; and ethylenically unsaturated groups.

In accordance with some embodiments, the polymer matrix is a cross-linked polymer matrix, which includes cross-linked poly(meth)acrylate. The polymer matrix, including cross-linked poly(meth)acrylate can be formed, with some embodiments, from components having (meth)acrylate groups, such as: polyalkylene glycol di(meth)acrylates (such as polyethylene glycol di(meth)acrylates); alkane diol di(meth)acrylates; components including at least three (meth)acrylate groups, such as trimethylolpropane tri(meth)acrylate, di(trimethylolpropane) tetra(meth)acrylate, and/or pentarythritol tetra(meth)acrylate; and optionally (meth)acrylate monomers having a single (meth)acrylate group (such as alkyl (meth)acrylates).

The cross-linked polymer matrix, with some embodiments, includes soft segments (or domains) and hard segments (or domains). The cross-linked polymer matrix including both soft domains and hard domains can be advantageous because it provides a photochromic layer that has a desirable combination of: photochromic properties (due to the soft domains); and hardness (due to the hard domains). The polymer matrix, with some embodiments, is a cross-linked polymer matrix, which includes cross-linked poly(meth)acrylate having both soft and hard domains, due to the selection of components, such as: polyalkylene glycol di(meth)acrylates (such as polyethylene glycol di(meth)acrylates); alkane diol di(meth)acrylates; components including at least three (meth)acrylate groups, such as trimethylolpropane tri(meth)acrylate, di(trimethylolpropane) tetra(meth)acrylate, and/or pentarythritol tetra(meth)acrylate; and optionally (meth)acrylate monomers having a single (meth)acrylate group (such as alkyl (meth)acrylates).

The photochromic layer can be formed, with some embodiments, in accordance with art-recognized methods. With some embodiments, a photochromic composition, as described previously herein, is applied over a surface of the substrate in accordance with art-recognized application methods, such as, but not limited to: spray application; spin coating; and jet-printing type application. The applied photochromic composition may be subjected to a pre-heating process to drive solvents (if any) out of the applied layer. If cross-linkable, the applied photochromic composition is typically subjected to elevated temperature (if thermocurable) and/or actinic radiation, such as UV light (if photocurable), which results in formation of the photochromic layer of the present invention.

The substrate of the photochromic article of the present invention can be composed of one or more suitable materials, including, but not limited to: organic materials, such as organic polymeric materials, such as, but not limited to, thermoplastic polycarbonates, crosslinked polycarbonates, poly(meth)acrylates, and combinations thereof; glasses, such as silica-based glasses; metals; ceramic materials; and combinations thereof. Examples of substrates that can be included in the photochromic article of the present invention include, but are not limited to, those described at column 35, line 5 through column 36, line 57 of US 8,628,685 B2, which disclosure is incorporated herein by reference.

In addition to the photochromic layer, the photochromic article can optionally include one or more further art-recognized layers, such as, but not limited to: a primer layer(s); an adhesive layer(s); a protective layer(s) (such as a hard-coat layer); a polarizing layer(s); a birefringent layer(s); an antireflective layer(s); and/or another photochromic layer(s) according to the present invention that include, with some embodiments, a different compound (iii) (such as represented by Formulas I-IV) and/or a different photochromic compound (iv). In accordance with some embodiments, at least one further layer, such as a primer layer and/or an adhesive layer, can be interposed between the substrate and the photochromic layer.

The present invention relates to an optical article, such as a photochromic optical article, that includes, with some embodiments: (A) a substrate; and (B) a photochromic layer, over at least a portion of a surface of the substrate (such as a forward surface and/or a rear surface thereof), where the photochromic layer is according to the present invention and includes, (i) a polymer matrix, (ii) a metal salt, (iii) a compound including a core structure (or core skeletal structure), such as represented by Formula (I), (II), (IIa), (III), (IIIa), (IV), and/or (IVa) as described previously herein, and optionally (iv) a photochromic compound.

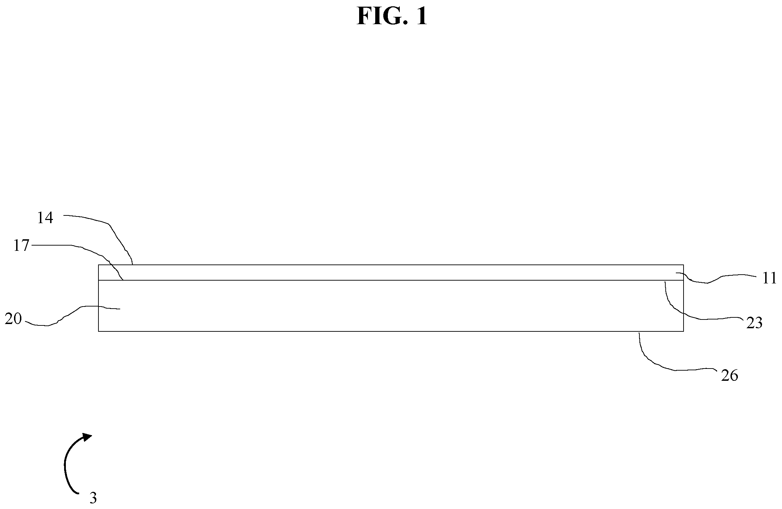

With reference to FIG. 1 of the drawings, there is depicted a photochromic article (3) according to some embodiments of the present invention, that includes a substrate (20) that includes a first surface (23) and a second surface (26). With further reference to FIG. 1, the photochromic article (3) also includes a photochromic layer (11) having a first surface (14) and a second surface (17). Photochromic layer (11) resides over a surface of substrate (20). More particularly, second surface (17) of photochromic layer (11) resides over first surface (23) of substrate (20). With some embodiments, and as depicted in FIG. 1, second surface (17) of photochromic layer (11) and first surface (23) of substrate (20) are in abutting relationship with each other. With some further embodiments: (i) one or more additional layers, such as a primer layer (not shown), is interposed between second surface (17) of photochromic layer (11) and first surface (23) of substrate (20); and/or (ii) one or more additional layers, such as a protective layer (not shown), is positioned over first surface (14) of photochromic layer (11). In accordance with some embodiments, first surface (14) of photochromic layer (11) faces a source of actinic radiation (not shown), such as the sun.

The present invention also relates to an optical article, such as a photochromic optical article, that includes: (A) a first substrate; (B) a second substrate, where the first substrate and the second substrate are in spaced opposition relative to each other; and (C) a photochromic layer interposed between the first substrate and the second substrate, where the photochromic layer is according to the present invention and includes, (i) a polymer matrix, (ii) a metal salt, (iii) a compound including a core structure (or core skeletal structure), such as represented by Formula (I), (II), (IIa), (III), (IIIa), (IV), and/or (IVa) as described previously herein, and optionally (iv) a photochromic compound.

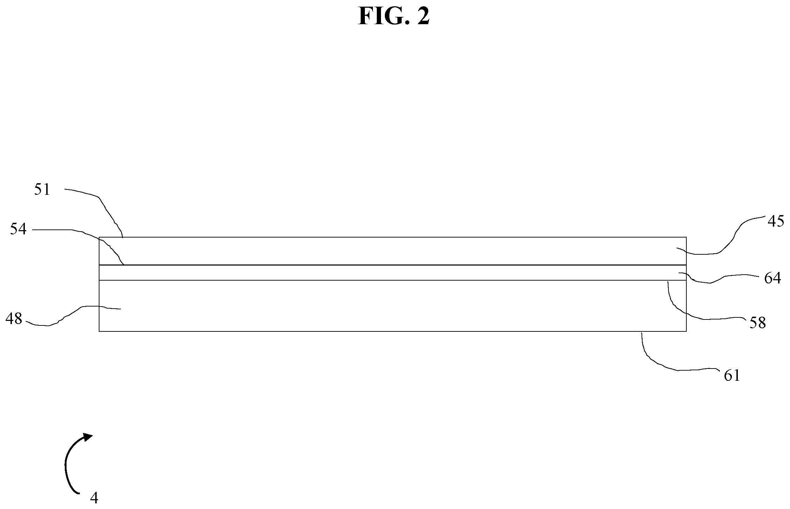

With reference to FIG. 2 of the drawings, there is depicted an optical article (4) according to some embodiments of the present invention that includes a first substate (45) and a second substrate (48), where first substrate (45) and second substrate (48) are in spaced opposition (spaced facing opposition) to each other. First substrate (45) includes a first surface (51) and a second surface (54), and second substrate (48) includes a first surface (58) and a second surface (61). Second surface (54) of first substrate (45) and first surface (58) of second substrate (48) are in spaced opposition to each other. Photochromic article (4) further includes a photochromic layer (64) that is interposed between first substrate (45) and second substrate (48). Photochromic layer (64), more particularly, is interposed between second surface (54) of first substrate (45) and first surface (58) of second substrate (48). With some embodiments, and as depicted in FIG. 2, photochromic layer (64) is interposed between and in abutting relationship with second surface (54) of first substrate (45) and first surface (58) of second substrate (48). With some further embodiments, one or more additional layers (not shown) (such as, but not limited to, a primer layer and/or an adhesive layer) is optionally interposed between: (i) photochromic layer (64) and second surface (54) of first substrate (45); and/or (ii) first surface (58) of second substrate (48). With some additional embodiments, one or more additional layers (not shown) are optionally positioned over: (i) first surface (51) of first substrate (45); and/or (ii) second surface (61) of second substrate (48), of photochromic article (4). In accordance with some embodiments, first substrate (45) is described as a forward substrate (45), and second substrate (48) is described as an underlying substrate (48). The additional layers can be selected from one or more of those art-recognized layers described previously herein.

The photochromic article, with some embodiments, is selected from ophthalmic articles, display articles, windows, mirrors, active liquid crystal cell articles, and passive liquid crystal cell articles.

The photochromic articles of the present invention, with some embodiments, can be ophthalmic articles, and the ophthalmic articles can be selected from corrective lenses, non-corrective lenses, contact lenses, intra-ocular lenses, magnifying lenses, protective lenses, and visors.

The photochromic articles of the present invention can, with some further embodiments, be display articles, and the display articles can be selected from screens, monitors, and security elements.

The present invention can be further characterized by one or more of the following non-limiting clauses.

Clause 1: A compound comprising a core structure represented by the following Formula (I), 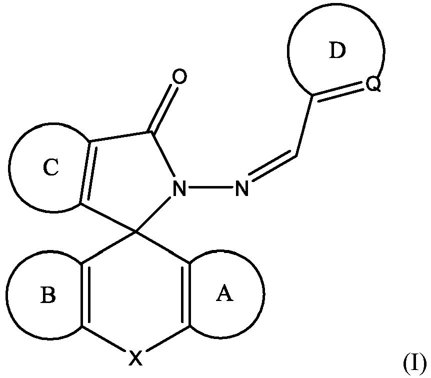 wherein for Formula (I),
Ring-A and Ring-B each independently comprise aryl substituted with at least one electron donating group,
Ring-C comprises unsubstituted aryl, substituted aryl, unsubstituted heteroaryl, or substituted heteroaryl,
Q is C-OH or N,
   when Q is C-OH, Ring-D comprises unsubstituted aryl, or substituted aryl,
   when Q is N, Ring-D comprises unsubstituted heteroaryl or substituted heteroaryl, and
X is S, C(R^{a})(R^{b}), or Si(R^{c})(R^{d}), wherein R^{a}, R^{b}, R^{c}, and R^{d} are in each case independently unsubstituted or substituted alkyl, or unsubstituted or substituted aryl.

Clause 2: The compound of clause 1, wherein with Formula (I), Ring-A and Ring-B each independently comprise aryl fused with at least one amine containing heterocycloalkyl ring that is electron donating.

Clause 3: The compound of clause 1 or clause 2, wherein the compound comprises a core structure represented by the following Formula (II), 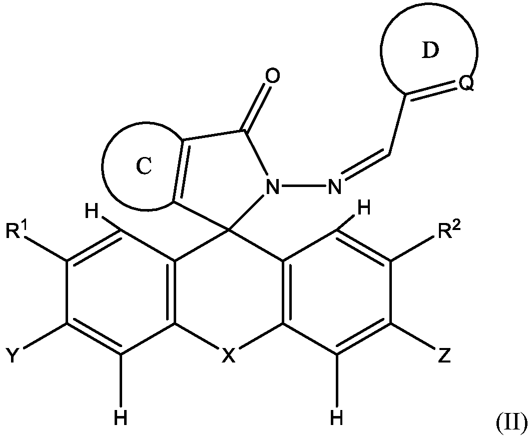 wherein for Formula (II),
X is S, C(R^{a})(R^{b}), or Si(R^{c})(R^{d}), wherein R^{a}, R^{b}, R^{c}, and R^{d} are in each case independently unsubstituted alkyl;
Y and Z are each independently the electron donating group; and
R¹ and R² are each independently selected from hydrogen, alkyl, or halogen.

Clause 4: The compound of clause 3, wherein for Formula (II) the electron donating group from which Y and Z are each independently selected from is in each case independently represented by the following Formulas (A), (B), (C), (D), (E), or (F):

-OR³ (A),

with reference to Formula (A), R³ in each case is independently hydrogen; unsubstituted or substituted alkyl; -Si(R¹⁰)₃ where each R¹⁰ is independently unsubstituted or substituted alkyl; or unsubstituted or substituted aryl; 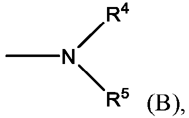 with reference to Formula (B), R⁴ and R⁵ are in each case independently hydrogen; unsubstituted or substituted alkyl; -OR¹¹ where R¹¹ is unsubstituted or substituted alkyl, or unsubstituted or substituted aryl; unsubstituted or substituted aryl; or R⁴ and R⁵ together form an optionally substituted alkyl ring that optionally includes a heteroatom; or R⁴ and R⁵ together form an optionally substituted polycyclic bridged alkyl ring that optionally includes a heteroatom; 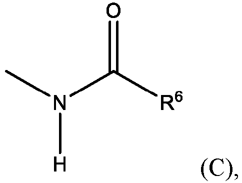 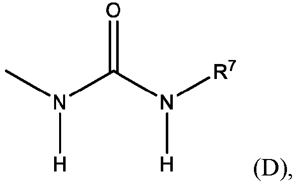 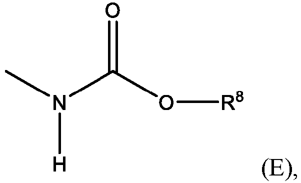 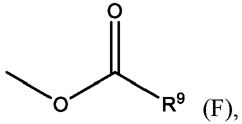 with reference to Formulas (C), (D), (E), and (F), R⁶, R⁷, R⁸, and R⁹ are in each case independently unsubstituted or substituted alkyl; or unsubstituted or substituted aryl.

Clause 5: The compound of any one of clauses 1-4, wherein Ring-C is represented by the following Formula (G), 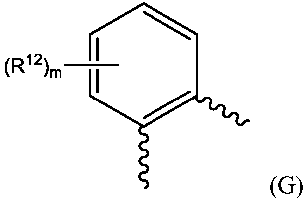 wherein for Formula (G),
subscript m is 0 to 4,
R¹² for each m is independently selected from:
   halogen;
   unsubstituted alkyl;
   perhalo alkyl;
   unsubstituted or substituted aryl;
   -OR¹³, where R¹³ is hydrogen, unsubstituted or substituted alkyl, or unsubstituted or substituted aryl;
   -NO₂;
   -N(R¹⁴)₂ where each R¹⁴ is independently hydrogen, unsubstituted or substituted alkyl, or unsubstituted or substituted aryl;
   an N-bonded unsubstituted or substituted nitrogen containing ring; or two adjacent R¹² groups together form an optionally substituted fused alkyl ring that optionally includes at least one heteroatom.

Clause 6: The compound of any one of clauses 1-5, wherein Ring-D is represented by the following Formula (H), 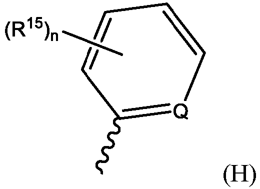 wherein for Formula (H),
subscript n is 0 to 4,
R¹⁵ for each n is independently selected from:
   halogen;
   unsubstituted alkyl optionally including at least one ethylenically unsaturated group;
   perhalo alkyl;
   unsubstituted or substituted cycloalkyl optionally including at least one heteroatom;
   unsubstituted or substituted aryl;
      -OR¹⁶, where R¹⁶ is hydrogen, unsubstituted or substituted alkyl, or unsubstituted or substituted aryl;
      -NO₂;
      -N(R¹⁷)₂ where each R¹⁷ is independently hydrogen, unsubstituted or substituted alkyl, unsubstituted or substituted aryl; or at least one R¹⁷ group forms a fused alkyl ring with an adjacent Ring-D carbon of Formula (H);
   a polyalkylene ether; or
   a group represented by the following Formula (J), 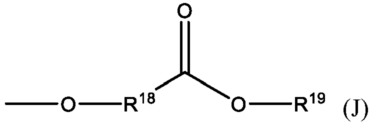 wherein with reference to Formula (J),
      R¹⁸ is selected from a divalent unsubstituted alkane, or a divalent unsubstituted aryl, and
      R¹⁹ is selected from hydrogen, unsubstituted alkyl, or unsubstituted aryl; or
   two adjacent R¹⁵ groups together form an optionally substituted fused aryl ring.

Clause 7: The compound of any one of clauses 3-6,wherein the compound comprises a core skeletal structure represented by the following Formula (IIa), 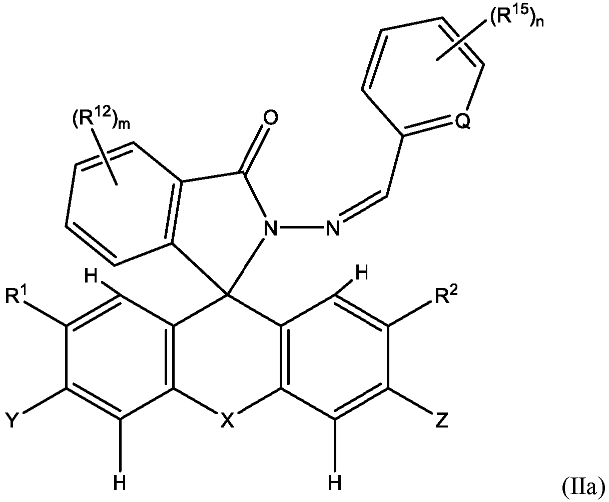 wherein for Formula (IIa), X, Y, Z, Q, R¹, R², m, n, R¹², and R¹⁵ are each independently as described previously herein with regard to: Formula (II) of clause 3; Formulas (A)-(F) of clause 4; Formula (G) of clause 5; and Formula (H) of clause 6.

Clause 8: The compound of clause 1 or clause 2, wherein the compound comprises a core skeletal structure represented by the following Formula (III), 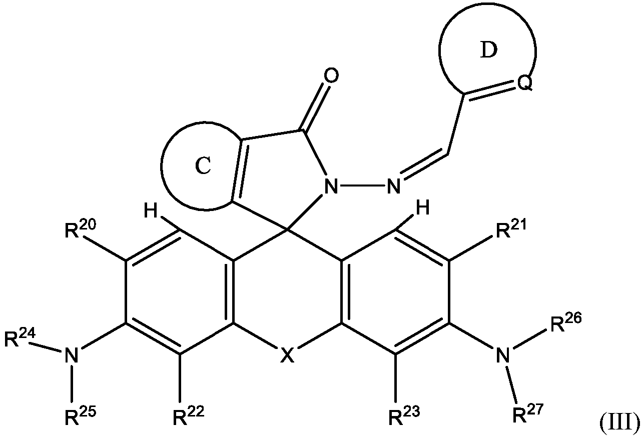 wherein for Formula (III),
X is S, C(R^{a})(R^{b}), or Si(R^{c})(R^{d}), wherein R^{a}, R^{b}, R^{c}, and R^{d} are in each case independently unsubstituted alkyl;
R²⁰ and R²¹ are each independently selected from hydrogen, unsubstituted alkyl, or halogen; or at least one of,
   R²⁰ and R²⁴ together form a fused alkyl ring, or
   R²¹ and R²⁶ together form a fused alkyl ring;
R²² and R²³ are each hydrogen, or at least one of,
   R²² and R²⁵ together form a fused alkyl ring, or
   R²³ and R²⁷ together form a fused alkyl ring;
R²⁴, R²⁵, R²⁶, and R²⁷ are each independently selected from hydrogen; unsubstituted or substituted alkyl; -OR²⁸ where R²⁸ is unsubstituted or substituted alkyl, unsubstituted or substituted aryl; or unsubstituted or substituted aryl;
   or at least one of,
   R²⁴ and R²⁵ together form an optionally substituted alkyl ring that optionally includes a heteroatom; or
   R²⁶ and R²⁷ together form an optionally substituted alkyl ring that optionally includes a heteroatom.

Clause 9: The compound of clause 8, wherein Ring-C is represented by Formula (G) as described in clause 5.

Clause 10: The compound of clause 8 or clause 9, wherein Ring-D is represented by Formula (H) as described in clause 6.

Clause 11: The compound of any one of clauses 8-10, wherein the compound comprises a core skeletal structure represented by the following Formula (IIIa), 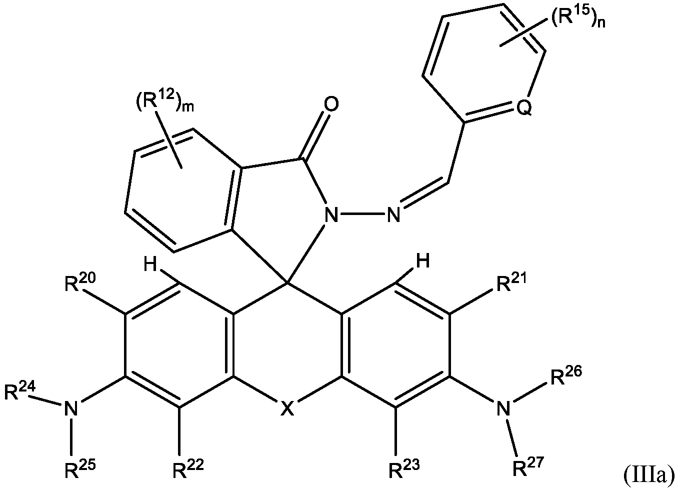 wherein Formula (IIIa), X, Q, m, n, R¹², R¹⁵, and R²⁰-R²⁷ are each independently as described previously herein with regard to: Formula (III) of clause 8; Formula (G) of clause 5; and formula (H) of clause 6.

Clause 12: The compound of clause 1 or clause 2, wherein the compound comprises a core skeletal structure represented by the following Formula (IV), 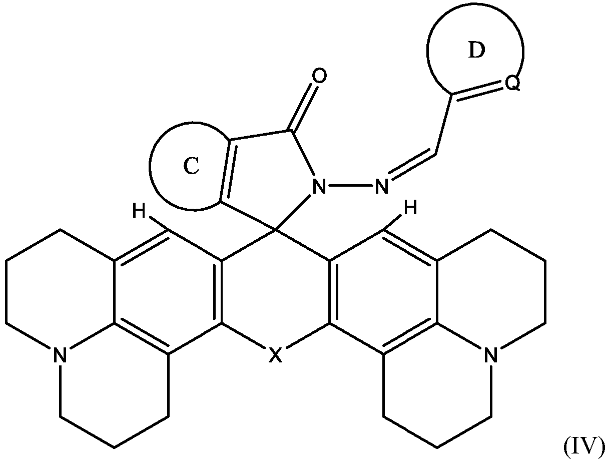 wherein for Formula (IV),
X is S, C(R^{a})(R^{b}), or Si(R^{c})(R^{d}), wherein R^{a}, R^{b}, R^{c}, and R^{d} are in each case independently unsubstituted alkyl.

Clause 13: The compound of clause 12, wherein Ring-C is represented by Formula (G) of clause 5.

Clause 14: The compound of clause 12 or clause 13, wherein Ring-D is represented by Formula (H) of clause 6.

Clause 15: The compound of any one of clauses 12-14, wherein the compound comprises a core skeletal structure represented by the following Formula (IVa), 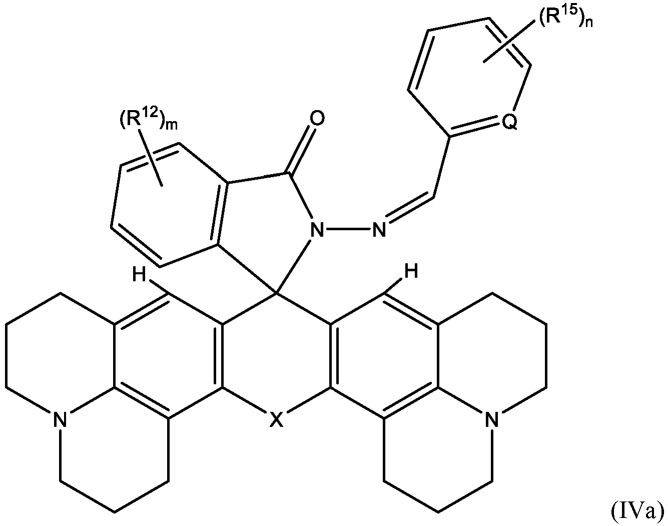 wherein for Formula (IVa), X, Q, m, n, R¹², and R¹⁵ are each independently as described previously herein with regard to: Formula (IV) of clause 12; Formula (G) of clause 5; and Formula (H) of clause 6.

Clause 16: A photochromic article comprising:
(a) a substrate; and
(b) a photochromic layer over a surface of said substrate, wherein said photochromic layer comprises,
   (i) a polymer matrix,
   (ii) a metal salt, and
   (iii) a compound comprising a core skeletal structure represented by the following Formula (I),

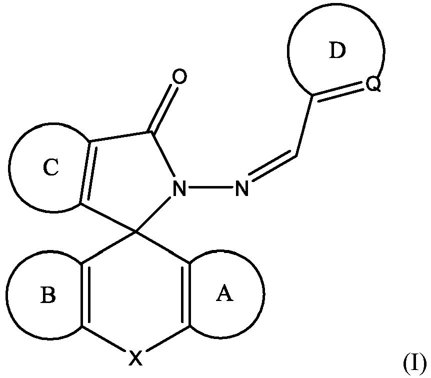

wherein for Formula (I),
   Ring-A and Ring-B each independently comprise aryl substituted with at least one electron donating group,
   Ring-C comprises unsubstituted aryl, substituted aryl, unsubstituted heteroaryl, or substituted heteroaryl,
   Q is C-OH or N,
      when Q is C-OH, Ring-D comprises unsubstituted aryl, or substituted aryl,
      when Q is N, Ring-D comprises unsubstituted heteroaryl or substituted heteroaryl, and
   X is S, C(R^{a})(R^{b}), or Si(R^{c})(R^{d}), wherein R^{a}, R^{b}, R^{c}, and R^{d} are in each case independently unsubstituted or substituted alkyl, or unsubstituted or substituted aryl
wherein an activated state absorption spectrum of said photochromic article comprises,
   a peak comprising,
      a maximum absorbance at a second wavelength,
      a first absorbance at a first wavelength that is 20 nm less than said second wavelength, and
      a third absorbance at a third wavelength that is 20 nm greater than said second wavelength,
   where said first absorbance and said third absorbance are each independently less than 85% of said maximum absorbance.

Clause 17: The photochromic article of clause 16, wherein said compound (iii) comprises a core skeletal structure represented by: Formula (II) of any one of clauses 3-6; or Formula (IIa) of clause 7; or Formula (III) of any one of clauses 8-10; or Formula (IIIa) of clause 11; or Formula (IV) of any one of clauses 12-14; or Formula (IVa) of clause 15.

Clause 18: The photochromic article of clause 16 or clause 17, wherein said metal salt comprises zinc, manganese, nickel, tin, or copper.

Clause 19: The photochromic article of clause 18, wherein an equivalents ratio of said compound (iii) to said metal salt is at least 1:0.1, such as from 1:0.1 to 1:10, or from 1:0.5 to 1:5, or from 1:0.8 to 1:1.2; or at least 1:1, such as from 1:1 to 1:10, or from 1:1 to 1:5, or from 1:1 to 1:1.2, inclusive of the recited values, in each case inclusive of the recited values.

Clause 20: The photochromic article of any one of clause 16-19, wherein said photochromic layer comprises at least two compounds that are in each case independently represented by Formula (I), and which are in each case different from each other, and wherein the activated state absorption spectrum of each compound represented by Formula (I) is different from the activated state absorption spectrum of each other compound represented by Formula (I).

Clause 21: The photochromic article of any one of clause 16-19, wherein said photochromic layer comprises at least two compounds that are in each case independently represented by Formula (II) of any one of clauses 3-6, and which are in each case different from each other, and wherein the activated state absorption spectrum of each compound represented by Formula (II) is different from the activated state absorption spectrum of each other compound represented by Formula (II).

Clause 22: The photochromic article of any one of clause 16-19, wherein said photochromic layer comprises at least two compounds that are in each case independently represented by Formula (III) of any one of clauses 8-10, and which are in each case different from each other, and wherein the activated state absorption spectrum of each compound represented by Formula (III) is different from the activated state absorption spectrum of each other compound represented by Formula (III).

Clause 23: The photochromic article of any one of clause 16-19, wherein said photochromic layer comprises at least two compounds that are in each case independently represented by Formula (IV) of any one of clauses 12-14, and which are in each case different from each other, and wherein the activated state absorption spectrum of each compound represented by Formula (IV) is different from the activated state absorption spectrum of each other compound represented by Formula (IV).

Clause 24: The photochromic article of any one of clauses 16-23, wherein said polymer matrix of said photochromic layer is a cross-linked polymer matrix.

Clause 25: The photochromic article of clause 24, wherein said cross-linked polymer matrix comprises cross-linked poly(meth)acrylate.

Clause 26: The photochromic article of any one of clauses 16-25, wherein said photochromic article further comprises a photochromic compound (iv).

Clause 27: The photochromic article of clause 26, wherein said photochromic compound (iv) is present in at least one of, said photochromic layer, or an optional further photochromic layer, wherein said optional further photochromic layer is positioned over said photochromic layer or interposed between said substrate and said photochromic layer.

Clause 28: The photochromic article of clause 26 or clause 27, wherein said photochromic compound (iv) comprises at least one of naphthopyrans, benzopyrans, phenanthropyrans, indenonaphthopyrans, spiro(indoline)naphthoxazines, spiro(indoline)pyridobenzoxazines, spiro(benzindoline)pyridobenzoxazines, spiro(benzindoline)naphthoxazines, spiro(indoline)-benzoxazines, fulgides, fulgimides, or diarylethenes.

Clause 29: The photochromic article of any one of clauses 16-28, wherein the photochromic article is selected from ophthalmic articles, display articles, windows, mirrors, active liquid crystal cell articles, and passive liquid crystal cell articles.

Clause 30: The photochromic article of clause 29, wherein the photochromic article is selected from ophthalmic articles, and the ophthalmic articles are selected from corrective lenses, non-corrective lenses, contact lenses, intra-ocular lenses, magnifying lenses, protective lenses, and visors.

Clause 31: The photochromic article of any one of clauses 16-30, wherein said metal salt further comprises a ligand.

Clause 32: The photochromic article of clause 31, wherein said ligand comprises at least one nitrogen atom having a lone pair of electrons.

Clause 33: The photochromic article of clauses 31 or 32, wherein said ligand comprises at least one of tetraalkyl alkylene diamine, pyridine, dialkylaminopyridine, bipyridine, dialkylbipyridine, and/or phenanthroline.

The present invention is more particularly described in the following examples, which are intended to be illustrative only, since numerous modifications and variations therein will be apparent to those skilled in the art. Unless otherwise specified, all parts and all percentages are by weight.

### EXAMPLES

In Part 1 of the following examples there is described the preparation of compounds according to the present invention. In Part 2 there is described the preparation of polymerizable compositions including the compounds of Part 1. In Part 3 there is described the preparation of photochromic articles (or test specimens) according to the present invention that include a first substrate, and a photochromic layer coated overtop, where the photochromic layer is formed from the polymerizable compositions of Part 2. In Part 4 of the examples, there is described the evaluation of and physical properties of the photochromic test specimens of Part 3.

### Part 1

In the following Examples 1-3 there is described the preparation of compounds according to the present invention that are represented, more particularly, by Formula (IIIa).

### Example 1

### Step 1

A 2-necked 250 mL round bottom flask was charged with tetrahydrofuran (60 mL), a stir bar, and 1-bromo-2,4,5-trifluorobenzene (8.44 grams). The mixture was cooled to -78 °C and 2.0 M iso-propyl magnesium chloride solution in THF was added (21 mL). The solution was moved to a 0 °C ice bath and left to stir for one hour. The reaction mixture was moved back to a -78 °C bath and 2,4,5-trifluorobenzaldehyde was added. The reaction mixture was then removed from the cooling bath, allowed to warm to RT, and left to stir overnight. HPLC and TLC showed a clear new product. The reaction mixture was slowly poured into deionized water, and the organic layer was isolated. The organic solvent was removed by rotary evaporation to yield 11.0 grams of the desired product as a yellow oil (94% yield).

### Step 2

To a 500 mL round bottom flask equipped with a stir bar, 80 ml of dichloromethane, 13.85 grams of the product of Step 1 (synthesized in a repeated, scaled-up reaction), 1.13 grams of potassium bromide, 0.37 grams of (2,2,6,6-Tetramethylpiperidin-1-yl)oxyl (TEMPO), and 50 mL of bleach were added. The mixture was stirred at room temperature for 4 hours after which the mixture was poured into deionized water, extracted with dichloromethane, dried with sodium sulfate, filtered, and concentrated under vacuum to provide 13.3 grams of the desired product as a pale-yellow oil which slowly crystallized on standing (yield: 97%).

### Step 3

To a 250 mL round bottom flask equipped with a stir bar, 13.3 grams of the product of Step 2, and secondary amine were added (neat or with dimethyl sulfoxide). The reaction was left to stir for 18 hours at 60 °C. The reaction mixture was cooled to room temperature, poured into a separatory funnel with brine, and extracted several times with ethyl acetate. The combined organic layers were washed with brine, dried with sodium sulfate, filtered, and immobilized onto silica. A column was run (0-10% Ethyl acetate in hexanes) and the product was isolated as a yellow/orange oil. The oil eventually solidified on standing.

### Step 4

A 2-neck 500 mL round bottom flask equipped with a condenser was charged with a stir bar, 6.60 grams of the product of Step 3, 4.36 grams of 2-ethylhexyl-3-marcaptopropionate, 4.60 grams of potassium carbonate, and 100 mL of dimethylacetamide. Nitrogen was bubbled through the reaction mixture as it was heated to 80°C and left to stir for 18 hours. Sodium t-butoxide was added to push the reaction to completion. The heat was removed, deionized water was added, and the desired product precipitated out on standing. The mixture was filtered, and the precipitate was washed with methanol to yield the desired thio-xanthone product as a pale yellow solid.

### Step 5

A 50 mL round bottom flask was charged with a stir bar, 0.20 grams of the product of Step 4, 1.31 grams of tert-butyl 2-bromobenzoate, and 10 mL of anhydrous tetrahydrofuran. The solution was stirred and cooled to -10°C. 3.9 mL of 1.3 M iPrMgCl LiCl (turbo Grignard) was added, and the reaction mixture was left to stir for 4 hours. The thio-xanthone was added to the reaction mixture and was left to stir overnight, slowly warming to RT. Saturated aqueous ammonium chloride was added to quench the reaction and it was extracted with ethyl acetate. The aqueous layer was then basified using aqueous NaOH and extracted with ethyl acetate. The organic layers from the acid and base workups were both purified by column chromatography. The aqueous phase was rotovapped and the crude solid was rinsed with DCM to try and separate the product from the salts. A column was run with a DCM:MeOH mobile phase. The product eluted with about 10-15% methanol. The fractions were rotovapped down to yield a dark red/purple solid.

### Step 6

A 100 mL round bottom flask equipped with a condenser was charged with a stir bar, 0.2 grams of the lactone product of Step 5, 10 mL of reagent ethanol, and 2 mL of hydrazine hydrate. The mixture was heated to reflux (~78 °C) and the reaction was left to stir for 18 hours. 5 mL of conc. HCl was added slowly to the reaction, and it was left to stir for 30 minutes. NaOH in water was slowly added until a pH of ~10 was reached. At this point, a solid precipitate formed. This was left to stir for one hour. The solid was then filtered off and washed several times with DI water.

### Step 7

A 50 mL round bottom flask equipped with a condenser was charged with a stir bar, 0.20 grams of the hydrazide product of Step 6, 10 mL of reagent ethanol, and 2 equivalents of 4-(diethylamino)-2-hydroxybenzaldehyde. The mixture was heated to reflux (about 78°C) and the reaction was left to stir for 18 hours. The reaction was rotovapped down, immobilized on silica, and purified by column chromatography. A column was run with a dichloromethane/hexanes mobile phase. The product did not elute in 100% DCM, so ethyl acetate was used but the product was only about 75-80% pure. A second column was run in a stepwise fashion to better purify the product (ethyl acetate/hexanes). The product was isolated as an orange solid. The compound of Example 1 is represented by the following Formula (E-1).

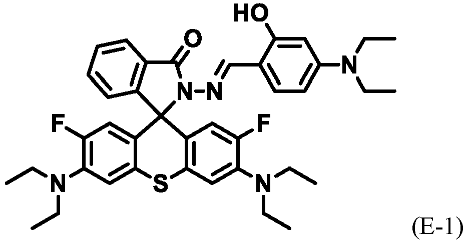

### Example 2

### Step 1

A 100 mL 2-necked round bottom flask was charged with a stir bar, 0.40 grams of the product of Example 1 Step 4, 3.32 grams of tert-butyl 2-bromo-5-trifluoromethylbenzoate, and 20 mL of anhydrous tetrahydrofuran. The solution was stirred and cooled to -10°C. 7.8 mL of 1.3 M iPrMgCl LiCl (turbo Grignard) was added, and the reaction mixture was left to stir for 3.5 hours. The thio-xanthone was added to the reaction mixture and was left to stir overnight, slowly warming to RT. The next morning, the reaction was quenched with methanol, immobilized on silica, and purified by column chromatography. The fractions containing the pure product were rotovapped down to yield a dark purple solid.

### Step 2

A 250 mL round bottom flask equipped with a condenser was charged with a stir bar, 0.48 grams of the lactone product of Step 1, 20 mL of reagent ethanol, and 6 mL of hydrazine hydrate. The mixture was heated to 70 °C and was left to stir for 18 hours. The next morning, 5 mL of conc. HCl was added slowly to the reaction, and it was left to stir for 30 minutes. NaOH in water was slowly added until a pH of about 10 was reached. At this point, a solid precipitate formed. This was left to stir for one hour. The solid was then filtered off and washed several times with DI water.

### Step 3

A 50 mL round bottom flask equipped with a condenser was charged with a stir bar, 0.22 grams of the hydrazide product of Step 2, 10 mL of reagent ethanol, and 3 equivalents of 4-(diethylamino)-2-hydroxybenzaldehyde. The mixture was heated to reflux (about 78°C) and the reaction was left to stir for 18 hours. The reaction was rotovapped down, immobilized on silica, and purified by column chromatography. A column was run with a ethyl acetate/hexanes mobile phase. The product was isolated as an orange solid. The compound of Example 2 is represented by the following Formula (E-2).

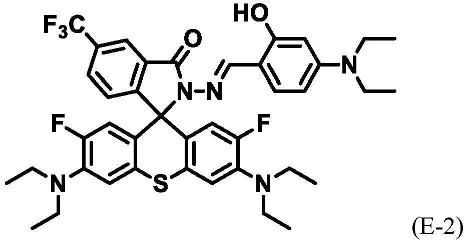

### Example 3

### Step 1

A 50 mL round bottom flask equipped with a condenser was charged with a stir bar, 0.22 grams of the hydrazide product of Example 2 Step 2, 10 mL of reagent ethanol, and 3 equivalents of 2,4,6-trihydroxybenzaldehyde. The mixture was heated to reflux (about 78°C) and the reaction was left to stir for 18 hours. The reaction was rotovapped down, immobilized on silica, and purified by column chromatography. A column was run with an ethyl acetate/hexanes mobile phase. The product was isolated as a gray solid. The compound of Example 3 is represented by the following Formula (E-3).

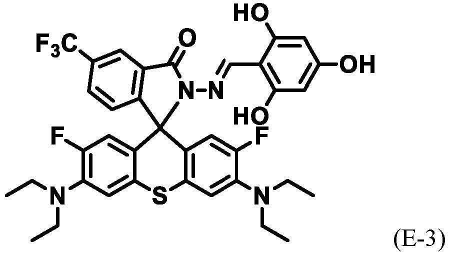

### Part 2

The preparation of polymerizable compositions including the compounds of Part 1 is described as follows.

Photopolymerizable compositions (Examples 2-1 through 2-3) according to the present invention were prepared in each case using the components and amounts (in grams) as summarized in the following Table 1. The components of Charge 1 were combined and heated to 90°C, stirred for a minimum of 30 minutes or until the solids were visually observed to have dissolved completely. Charge 2 was added and the mixture was stirred for a minimum of 15 minutes or until the solids were visually observed to have dissolved completely, followed by addition of the component of Charge 3, heating was turned off and the resulting mixture stirred until cooled to room temperature.

**TABLE 1**

| **Photopolymerizable Compositions - Examples 2-1 - 2-3** | | |
|---|---|---|
| | | **Amount (g)** |
| Charge 1 | Compound of Part 1 | 1.75 |
| | UV stabilizer ⁽¹⁾ | 2.00 |
| | Polyethylene Glycol (600) Dimethacrylate ⁽²⁾ | 70.00 |
| | Trimethylolpropane Trimethacrylate ⁽³⁾ | 30.00 |
| Charge 2 | ZnCl₂ ⁽⁴⁾ | 1:1 molar ratio based on Compound of Part 1 ⁽⁵⁾ |
| Charge 3 | Omnirad 819 ⁽⁶⁾ | 0.20 |

| | | |
|---|---|---|
| (1) IRGANOX^{®} 245 a sterically hindered phenolic antioxidant that protects organic substrates against thermo-oxidative degradation available from BASF. (2) SR252 a polyether compound commercially available from Arkema Sartomer Americas. (3) SR350 a trifunctional (meth)acrylate ester available from Arkema Sartomer Americas. (4) A metal salt commercially available from Sigma-Aldrich. (5) A 1:1 molar ratio based on the molecular weight of the metal salt and the molecular weight of the particular compound of Part 1. (6) Omnirad 819 (Bis(2,4,6-Trimethylbenzoyl)phenylphosphine oxide) a type 1 free radical, commercially available from IGM Resins. | | |

### Part 3 - Preparation of Coated Photochromic Articles

Finished plano lenses made from Mineral glass (6 base, 70 mm diameter and 1mm thick) were used as substrates for all coated articles. The lenses were cleaned by wiping with a paper cloth dampened with isopropanol and then dried in air. Next, each lens was corona treated with a Power Generator HV 2000 (serial no. 020270) from Tantec EST Inc. set at 70 kV and 1000 W with a belt speed of 5ft/min.

Next, approximately 1.5 mL of a photopolymerizable primer coating (composed of Tricyclodecanedimethanol Diacrylate⁽⁷⁾ (60%), 2-Hydroxyethyl methacrylate⁽⁸⁾ (40%), (3-Aminopropyl)trimethoxysilane⁽⁹⁾ (10%) and Omnirad 819 (0.5%)) was applied to a portion of the convex side of the lens surface. The lens was spun using a spin processor from Laurell Technologies Corp. (WS-650-MZ-23NPPB) at 1000 revolutions per minutes (rpm) for two seconds, followed by 2500 rpm for eight seconds. The lens was sent through a conveyor system (7.6ft/min), passed through a nitrogen purged chamber fitted with a series of LED UV lamps.

After the primer was cured, a photopolymerizable coating composition according to the present invention (from Part 2) were applied to each lens via spin coating process. Approximately 1.5 mL of the solution was applied to a portion of the lens surface. The lens was spun using a spin processor from Laurell Technologies Corp. (WS-650-MZ-23NPPB) at 550 rpm for four seconds, followed by 1050 rpm for 3 seconds. The lens was sent through a conveyor system (2.1ft/min), passed through a nitrogen purged chamber fitted with a series of LED UV lamps.

Next, a photopolymerizable protective coating (of the type described in U.S. Pat. No. 7,452,611 B2) was applied to each lens via spin coating process. Approximately 1.25 mL of the solution was applied to a portion of the lens surface. The lens was spun using a spin processor from Laurell Technologies Corp. (WS-650-MZ-23NPPB) at 700 rpm for two seconds, followed by 2000 rpm for 2.8 seconds. Next, using a conveyor system (6ft/min), the coated and spun test specimens were passed through a nitrogen purged chamber fitted with a series of D Type bulbs positioned above glass windows on the top of the chamber. The glass windows had high transmissivity for ultraviolet and visible light.
(7) SR833 S a difunctional acrylate monomer commercially available from Arkema Sartomer Americas.
(8) A mono functional (meth)acrylate available from Sigma-Aldrich.
(9) A silane coupling agent used to functionalize substrates with alkoxysilane molecules available from Sigma-Aldrich.

### Part 4

### Evaluation of Properties of Test Specimens

The photochromic performance of the test specimens of Part 3 were tested on the Bench for Measuring Photochromics ("BMP") made by Essilor, Ltd. France, the results of which are summarized in Table 2. The BMP was maintained at a constant temperature of 73.4°F (23°C) during testing. Prior to testing, each of the coated test specimens were exposed to 365-nanometer ultraviolet light for about 10 minutes at a distance of about 14 centimeters to activate the photochromic materials. The UVA (315 to 380nm) irradiance at the lens was measured with a LICOR^{®} Model Li-1800 spectroradiometer and found to be 22.2 watts per square meter. Each test specimen was then placed under a 500 watt, high intensity halogen lamp for about 10 minutes at a distance of about 36 centimeters to bleach (inactivate) the photochromic materials. The illuminance at the specimen was measured with the LICOR^{®} spectroradiometer and found to be 21.9 Klux. Each test specimen was then kept in a dark environment at room temperature (from 70 to 75 °F / 21 to 24 °C) for at least one hour prior to testing on the BMP. Prior to measurement, each lens was measured for ultraviolet absorbance at 390 nanometers (Abs 390 nm).

The BMP optical bench was fitted with two 150-watt Newport Model #6255 Xenon arc lamps set at right angles to each other. The light path from Lamp 1 was directed through a 3mm SCHOTT^{®} KG-2 band-pass filter and appropriate neutral density filters that contributed to the required UV and partial visible light irradiance level. The light path from Lamp 2 was directed through a 3mm SCHOTT^{®} KG-2 band-pass filter, a SCHOTT^{®} short band 400 nm cutoff filter and appropriate neutral density filters in order to provide supplemental visible light illuminance. A 2 inch x 2 inch (5.1 cm x 5.1 cm) 50% polka dot beam splitter set at 45° to each lamp is used to mix the two beams. The combination of neutral density filters and voltage control of the Xenon arc lamp were used to adjust the intensity of the irradiance. Software i.e., BMPSoft version 2.1e was used on the BMP to control timing, irradiance, air cell and sample temperature, shuttering, filter selection, and response measurement. A ZEISS^{®} spectrophotometer, Model MCS 601, with fiber optic cables for light delivery through the lens was used for response and color measurement. Photopic response measurements were collected on each lens.

The power output of the optical bench, i.e., the dosage of light that the lens was exposed to, was adjusted to 6.7 watts per square meter (W/m²) UVA, integrated from 315-380 nm, and 50 Klux illuminance, integrated from 380-780 nm. Measurement of this power set point was made using an irradiance probe and the calibrated Zeiss spectrophotometer. The lens sample cell was fitted with a quartz window and self-centering sample holder. The temperature in the sample cell was controlled at 23°C through the software with a modified Facis, Model FX-10, environment simulator. Measurement of the sample's dynamic photochromic response and color measurements were made using the same Zeiss spectrophotometer with fiber optic cables for light delivery from a tungsten halogen lamp through the sample. The collimated monitoring light beam from the fiber optic cable was maintained perpendicular to the test sample while passing through the sample and directed into a receiving fiber optic cable assembly attached to the spectrophotometer. The exact point of placement of the sample in the sample cell was where the activating xenon arc beam and the monitoring light beam intersected to form two concentric circles of light. The angle of incidence of the xenon arc beam at the sample placement point was about 30° from perpendicular.

Response measurements, in terms of a change in optical density (ΔOD) from the unactivated or bleached state to the activated or colored state were determined by establishing the initial unactivated transmittance, opening the shutter from the Xenon lamp(s) and measuring the transmittance through activation at selected intervals of time. Change in optical density was determined according to the formula: ΔOD = log10(%Tb/%Ta), where %Tb is the percent transmittance in the bleached state and %Ta is the percent transmittance in the activated state.

**TABLE 2**

| **Normalized⁽¹⁰⁾ Spectral Data Obtained From** | | | | |
|---|---|---|---|---|
| **Test Specimens Prepared Using Example Compositions 2-1 - 2-3** | | | | |
| **Structure** | **Example** | **λₘₐₓ⁽¹¹⁾ (nm)** | **First Wavelength Absorbance** | **Third Wavelength Absorbance** |
| 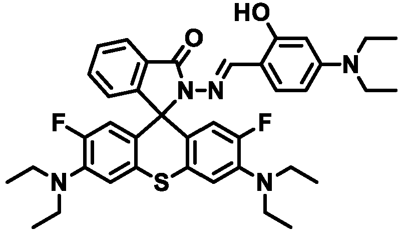 | 2-1 | 589 | 0.73 | 0.62 |
| 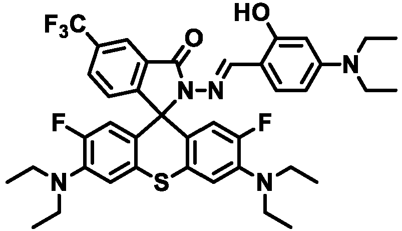 | 2-2 | 594 | 0.70 | 0.61 |
| 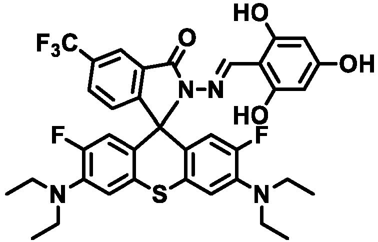 | 2-3 | 595 | 0.71 | 0.63 |

| | | | | |
|---|---|---|---|---|
| (10) The absorbance spectra were normalized so that the absorbance corresponding to λₘₐₓ (second wavelength) was set to 1.0. (11) λₘₐₓ refers to the second wavelength, which corresponds to the maximum absorbance of the peak associated with the compound of the present invention. | | | | |

The results summarized in Table 2 demonstrate that compounds according to the present invention provide a narrow activated state absorption peak, and are capable of limiting or blocking selected wavelengths (such as centered on the λₘₐₓ thereof) in an activated state.

The present invention has been described with reference to specific details of particular embodiments thereof. It is not intended that such details be regarded as limitations upon the scope of the invention except insofar as to the extent that they are included in the accompanying claims.

## Claims

1. A compound comprising a core structure represented by the following Formula (I), 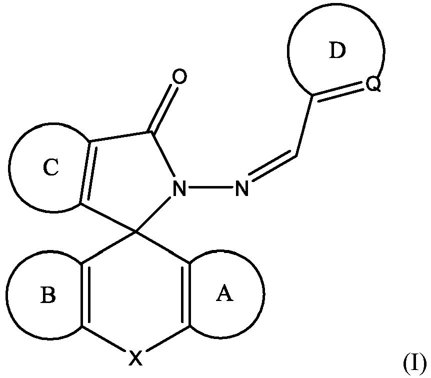
wherein for Formula (I),
Ring-A and Ring-B each independently comprise aryl substituted with at least one electron donating group,
Ring-C comprises unsubstituted aryl, substituted aryl, unsubstituted heteroaryl, or substituted heteroaryl,
Q is C-OH or N,
when Q is C-OH, Ring-D comprises unsubstituted aryl, or substituted aryl,
when Q is N, Ring-D comprises unsubstituted heteroaryl or substituted heteroaryl, and
X is S, C(R^{a})(R^{b}), or Si(R^{c})(R^{d}), wherein R^{a}, R^{b}, R^{c}, and R^{d} are in each case independently unsubstituted or substituted alkyl, or unsubstituted or substituted aryl.

2. The compound of claim 1, wherein with Formula (I), Ring-A and Ring-B each independently comprise aryl fused with at least one amine containing heterocycloalkyl ring that is electron donating.

3. The compound of claim 1, wherein the compound comprises a core structure represented by the following Formula (II), 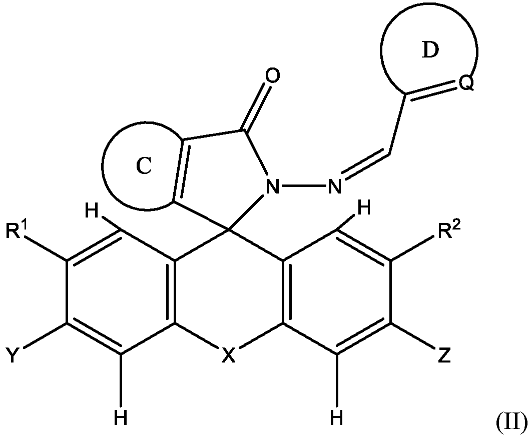 wherein for Formula (II),
X is S, C(R^{a})(R^{b}), or Si(R^{c})(R^{d}), wherein R^{a}, R^{b}, R^{c}, and R^{d} are in each case independently unsubstituted alkyl;
Y and Z are each independently the electron donating group; and
R¹ and R² are each independently selected from hydrogen, alkyl, or halogen.

4. The compound of claim 3, wherein for Formula (II) the electron donating group from which Y and Z are each independently selected from is in each case independently represented by the following Formulas (A), (B), (C), (D), (E), or (F):
-OR³ (A),
with reference to Formula (A), R³ in each case is independently hydrogen; unsubstituted or substituted alkyl; -Si(R¹⁰)₃ where each R¹⁰ is independently unsubstituted or substituted alkyl; or unsubstituted or substituted aryl; 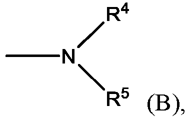 with reference to Formula (B), R⁴ and R⁵ are in each case independently hydrogen; unsubstituted or substituted alkyl; -OR¹¹ where R¹¹ is unsubstituted or substituted alkyl, or unsubstituted or substituted aryl; unsubstituted or substituted aryl; or R⁴ and R⁵ together form an optionally substituted alkyl ring that optionally includes a heteroatom; or R⁴ and R⁵ together form an optionally substituted polycyclic bridged alkyl ring that optionally includes a heteroatom; 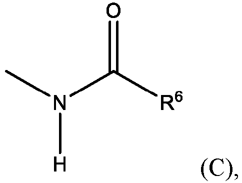 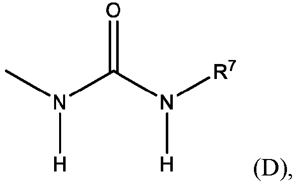 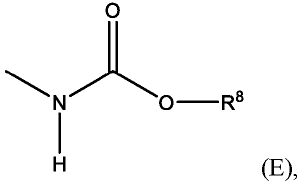 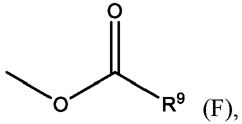 with reference to Formulas (C), (D), (E), and (F), R⁶, R⁷, R⁸, and R⁹ are in each case independently unsubstituted or substituted alkyl; or unsubstituted or substituted aryl.

5. The compound of claim 3, wherein Ring-C is represented by the following Formula (G), 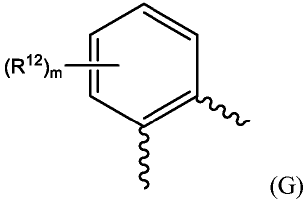 wherein for Formula (G),
subscript m is 0 to 4,
R¹² for each m is independently selected from:
halogen;
unsubstituted alkyl;
perhalo alkyl;
unsubstituted or substituted aryl;
-OR¹³, where R¹³ is hydrogen, unsubstituted or substituted alkyl, or unsubstituted or substituted aryl;
-NO₂;
-N(R¹⁴)₂ where each R¹⁴ is independently hydrogen, unsubstituted or substituted alkyl, or unsubstituted or substituted aryl;
an N-bonded unsubstituted or substituted nitrogen containing ring; or
two adjacent R¹² groups together form an optionally substituted fused alkyl ring that optionally includes at least one heteroatom.

6. The compound of claim 3, wherein Ring-D is represented by the following Formula (H), 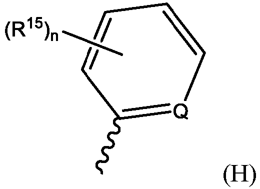 wherein for Formula (H),
subscript n is 0 to 4,
R¹⁵ for each n is independently selected from:
halogen;
unsubstituted alkyl optionally including at least one ethylenically unsaturated group;
perhalo alkyl;
unsubstituted or substituted cycloalkyl optionally including at least one heteroatom;
unsubstituted or substituted aryl;
-OR¹⁶, where R¹⁶ is hydrogen, unsubstituted or substituted alkyl, or unsubstituted or substituted aryl;
-NO₂;
-N(R¹⁷)₂ where each R¹⁷ is independently hydrogen, unsubstituted or substituted alkyl, unsubstituted or substituted aryl; or at least one R¹⁷ group forms a fused alkyl ring with an adjacent Ring-D carbon of Formula (H);
a polyalkylene ether; or
a group represented by the following Formula (J), 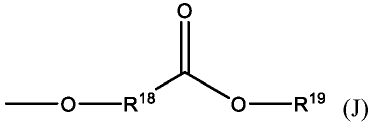 wherein with reference to Formula (J),
R¹⁸ is selected from a divalent unsubstituted alkane, or a divalent unsubstituted aryl, and
R¹⁹ is selected from hydrogen, unsubstituted alkyl, or unsubstituted aryl; or
two adjacent R¹⁵ groups together form an optionally substituted fused aryl ring.

7. The compound of claim 1, wherein the compound comprises a core skeletal structure represented by the following Formula (III), 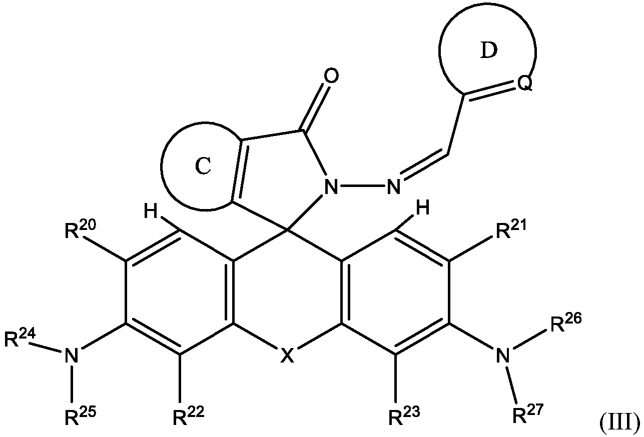 wherein for Formula (III),
X is S, C(R^{a})(R^{b}), or Si(R^{c})(R^{d}), wherein R^{a}, R^{b}, R^{c}, and R^{d} are in each case independently unsubstituted alkyl;
R²⁰ and R²¹ are each independently selected from hydrogen, unsubstituted alkyl, or halogen; or at least one of,
R²⁰ and R²⁴ together form a fused alkyl ring, or
R²¹ and R²⁶ together form a fused alkyl ring;
R²² and R²³ are each hydrogen, or at least one of,
R²² and R²⁵ together form a fused alkyl ring, or
R²³ and R²⁷ together form a fused alkyl ring;
R²⁴, R²⁵, R²⁶, and R²⁷ are each independently selected from hydrogen; unsubstituted or substituted alkyl; -OR²⁸ where R²⁸ is unsubstituted or substituted alkyl, unsubstituted or substituted aryl; or unsubstituted or substituted aryl;
or at least one of,
R²⁴ and R²⁵ together form an optionally substituted alkyl ring that optionally includes a heteroatom; or
R²⁶ and R²⁷ together form an optionally substituted alkyl ring that optionally includes a heteroatom.

8. The compound of claim 1, wherein the compound comprises a core skeletal structure represented by the following Formula (IV), 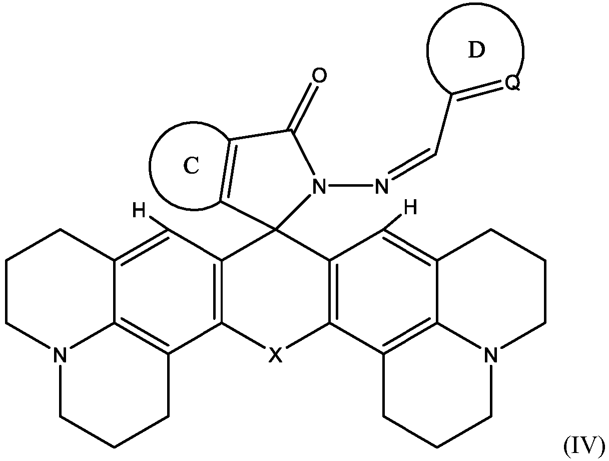 wherein for Formula (IV),
X is S, C(R^{a})(R^{b}), or Si(R^{c})(R^{d}), wherein R^{a}, R^{b}, R^{c}, and R^{d} are in each case independently unsubstituted alkyl.

9. A photochromic article comprising:
(a) a substrate; and
(b) a photochromic layer over a surface of said substrate, wherein said photochromic layer comprises,
(i) a polymer matrix,
(ii) a metal salt, and
(iii) a compound comprising a core structure represented by the following Formula (I), 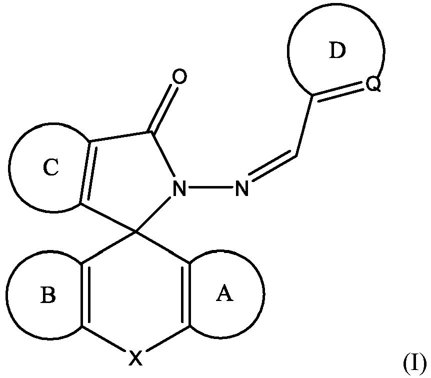 wherein for Formula (I),
Ring-A and Ring-B each independently comprise aryl substituted with at least one electron donating group,
Ring-C comprises unsubstituted aryl, substituted aryl, unsubstituted heteroaryl, or substituted heteroaryl,
Q is C-OH or N,
when Q is C-OH, Ring-D comprises unsubstituted aryl, or substituted aryl,
when Q is N, Ring-D comprises unsubstituted heteroaryl or substituted heteroaryl, and
X is S, C(R^{a})(R^{b}), or Si(R^{c})(R^{d}), wherein R^{a}, R^{b}, R^{c}, and R^{d} are in each case independently unsubstituted or substituted alkyl, or unsubstituted or substituted aryl

10. The photochromic article of claim 9 wherein: said metal salt comprises zinc, manganese, nickel, tin, or copper; and an equivalents ratio of said compound to said metal salt is at least 1:0.1.

11. The photochromic article of claim 9, wherein said metal salt comprises a ligand.

12. The photochromic article of claim 9, wherein said photochromic layer comprises at least two compounds that are in each case independently represented by Formula (I), and which are in each case different from each other, and wherein the activated state absorption spectrum of each compound represented by Formula (I) is different from the activated state absorption spectrum of each other compound represented by Formula (I).

13. The photochromic article of claim 9, wherein said photochromic article further comprises a photochromic compound, wherein said photochromic compound is present in at least one of, said photochromic layer, or an optional further photochromic layer, wherein said optional further photochromic layer is positioned over said photochromic layer or interposed between said substrate and said photochromic layer.

14. The photochromic article of claim 13, wherein said photochromic compound comprises at least one of naphthopyrans, benzopyrans, phenanthropyrans, indenonaphthopyrans, spiro(indoline)naphthoxazines, spiro(indoline)pyridobenzoxazines, spiro(benzindoline)pyridobenzoxazines, spiro(benzindoline)naphthoxazines, spiro(indoline)-benzoxazines, fulgides, fulgimides, or diarylethenes.

15. The photochromic article of claim 9, wherein the photochromic article is selected from ophthalmic articles, display articles, windows, mirrors, active liquid crystal cell articles, and passive liquid crystal cell articles.
